(19) Europäisches Patentamt
European Patent Office
Office européen des brevets

(11) EP 1 722 376 A1

(12) EUROPEAN PATENT APPLICATION
published in accordance with Art. 158(3) EPC

(43) Date of publication:
15.11.2006 Bulletin 2006/46

(21) Application number: 05711009.0

(22) Date of filing: 28.01.2005

(51) Int Cl.:
*H01B 1/12* (2006.01) *C08L 67/03* (2006.01)
*C08G 63/181* (2006.01) *C08G 63/68* (2006.01)

(86) International application number:
PCT/RU2005/000027

(87) International publication number:
WO 2005/076289 (18.08.2005 Gazette 2005/33)

(84) Designated Contracting States:
AT BE BG CH CY CZ DE DK EE ES FI FR GB GR HU IE IS IT LI LT LU MC NL PL PT RO SE SI SK TR

(30) Priority: 03.02.2004 RU 2004102741

(71) Applicants:
- Koltsova, Anastasia Adrianovna
Moscow 117419 (RU)
- Nikitina, Yuna Evgenevna
Moscow 129626 (RU)

(72) Inventors:
- LATCHINOV, Alexei Nikolaevich
Ufa, 450083 (RU)
- SALAZKIN, Sergei Nikolaevich
Moscow, 117449 (RU)

(74) Representative: von Füner, Nicolai et al
v. Füner Ebbinghaus Finck Hano
Patentanwälte
Mariahilfplatz 2&3
81541 München (DE)

# (54) ELECTROACTIVE POLYMER AND MATERIAL BASED THEREON

(57) The invention relates to electric engineering and can be adopted in creating converters of external physical impact into electric signal: tensometric (strain-gauge) elements, pressure sensors, button switches being switching elements for electric signals. The object of invention is to provide a polymer electroactive material having a higher electric conduction sensitivity to external impacts, e.g., pressure, etc., within a wide range of polymer material film thickness, as well as a high reproducibility of useful properties. The problem is solved by means of an electroactive polymer with electric conduction depending on external physical fields, which material comprises molecular electroactive fragments possessing a high polarizability and/or bistable electronic energy structure with respect to a process of excess electron capture, and said molecular electroactive fragments are in the main polymer chain or in side branches of the main polymer chain and are bound in between via respective intermediate elements of the molecular chain. The material based on said electroactive polymers is implemented in the form of films, or fibers, or coatings, or bodies or revolution. At least one of geometrical sizes defining a material form does not exceed a double depth of penetration of surface charge.

EP 1 722 376 A1

## Description

### Field of the Invention

The invention relates to electric engineering and can be widely adopted in creating converters of external physical impact into electric signal: tensometric (strain-gauge) elements, pressure sensors, button switches being switching elements for electric signals.

### Background of the Invention

Known is the composition for piezo-resistive material [SU 1734124, Int. $Cl^5$ H01B 1/06, Off. Gazette No. 18, 15.05.1992] comprising polymer and fine-grained addition, which composition comprising polyphenilene-phthalide, polyfluorenylene-phthalide, or isoprene rubber as the polymer, piezoelectric powder as the fine-grained additive, and further comprising organic solvent, with the following components ratio, weight %:

| | |
|---|---|
| Polymer 1 | 13-23; |
| Piezoelectric powder | 11-20; |
| Organic solvent | the balance. |

As disadvantage of this material, it should be noted that the fine-grained additive is present in its formulation and leads to appearance of suspense heterogeneity, composition stratification, powder precipitation, and loss of film-formation properties.

Also known is the piezo-resistive material and method for producing thereof [RU 2006078, Int. $Cl^5$ H01B 1/06, Off. Gazette No. 1, 15.01.1994], the material comprising polymer and additive, the polymer being polystyrene, or polysulfone, or poly(3,3' phthalydilidene-4,4' biphenylilene), and the additive being tetrathiofulvalene, or nitrophenyloctyloxibenzoate, or phenol-phthalein, with the following components ratio, weight %:

| | |
|---|---|
| Said polymer | 45-80; |
| Said additive | 20-55. |

The method for producing the piezo-resistive material includes steps of: mixing the polymer, additive and solvent with further forming the material by removing the solvent before the mixture being hardened; using polystyrene, or polysulfone, or poly(3,3' phthalydilidene-4,4' biphenylilene) as the polymer, and tetrathiofulvalene, or nitrophenyloctyloxibenzoate, or phenol-phthalein as the additive, with the following components ratio: 45-80 / 20-55, respectively; and, after removing the solvent, carrying out heat treatment at 80-100 °C during 40-60 minutes.

As disadvantage of this material, it should be noted that the positive effect is achieved in a narrow range of polymer film thickness less than 1.5 μm, which limits strictly possibilities of use of these materials. As was indicated by analysis, the material sensitivity at greater thickness decreases sharply to zero, and the electrical conduction of the material at the thickness of 2 μm loses sensitivity to external impact. In this connection, the material having thickness of 1.5 μm does not present the interest in the claimed field. Moreover, the multi-component nature of the initial composition decreases the reproducibility of the positive effect, since said nature can lead to the solution stratification, homogeneity disturbance, limits the shelf life and can lead to appearance of non-controllable chemical reactions preventing the achievement of the positive effect.

Known is the polymer material [А.Н. Лачинов, А.Ю. Жеребов, В.М. Корнилов, Письма в ЖЭТФ, 1990, т. 52, No 2, c. 742-745 *(in Russian)]* consisting of polydiphenyl-phthalide polymer produced by solving the polymer in cyclohexanone and further forming film at a suitable substrate by centrifugation. The electrical conduction of this material possesses the sensitivity to such impacts as uniaxial pressure [Лачинов А.Н., Жеребов А.Ю., Корнилов В.М., ЖЭТФ, 1992, **102**, 1(7), c. 187 (*in Russian*)], temperature [Пономарёв А.Ф., Красильников В.А., Васильев М., Лачинов А.Н., ЖЭТФ, 2003, том 73, выпуск 11, c. 137-140 (*in Russian*)], change of boundary conditions at the metal-polymer separation surface Корнилов В.М., Лачинов А.Н., Письма в ЖЭТФ, 1995, т. 61, No 11, c. 902-906 (*in Russian*)].

As disadvantage of this material, it should be noted a small thickness range of films produced therefrom and

having the positive effect. Analysis has shown that this polymer material possesses the highest sensitivity at film thickness in the range from 0.3 to 1 μm, and limits shown in the article [Корнилов В.М., Лачинов А.Н., Письма в ЖЭТФ, 1995, Т. 61, No 11, с. 902-906 (*in Russian*); A. Zherebov, A. Lachinov, V. Kornilov, Synthetic Metals 84 (1997) 917-920] up to 10 μm are relevant to parameters of samples used in those studies rather than their electrophysical characteristics. At thickness more than 1 μm, the sensitivity of the material electrical conduction to external impacts decreases sharply, and substantially disappears at thickness of 2 μm, in this case, the material becomes conventional dielectric from the viewpoint of its electrophysical properties, and a high electrical conduction is impossible to be achieved using small external impacts. In this connection, the practical use of this material is possible only in the presence of some carrying surface, at which this film is fastened during the forming process, and that imposes an essential limitation onto use of technological advantages which are inherent to film materials.

**Summary of the Invention**

The problem and technical result of the claimed invention is to provide a polymer electroactive material having a higher electric conduction sensitivity to external impacts, e.g., pressure, etc., within a wide range of polymer material film thickness, as well as a high reproducibility of useful properties. In order to solve this problem, the creation of the electroactive polymer material based on respective electroactive polymers is provided.

Said problem and technical result are achieved by means of an electroactive polymer with electric conduction depending on external physical fields, which material comprises molecular electroactive fragments possessing a high polarizability and/or bistable electronic energy structure with respect to a process of excess electron capture, and said molecular electroactive fragments are in the main polymer chain or in side branches of the main polymer chain and are bound in between via respective intermediate elements of the molecular chain.

Said problem and technical result are achieved also by that the electroactive polymer comprises a phthalide group as the molecular electroactive fragment of the main polymer chain, and elements of aromatic polymers comprising heteroatoms (oxygen, nitrogen, sulfur) as the intermediate elements of the polymer chain.

In another embodiment, the electroactive polymer comprises elements of aromatic polyesters (polyarylates) as the intermediate elements of the polymer chain.

In yet another embodiment, the electroactive polymer possesses the following structure:

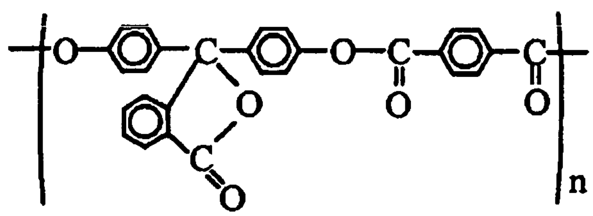

In yet another embodiment, the electroactive polymer possesses the following structure:

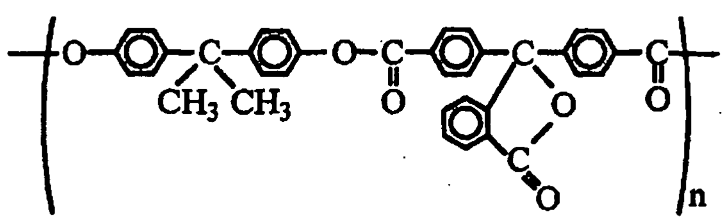

In yet another embodiment, the electroactive polymer possesses the following structure:

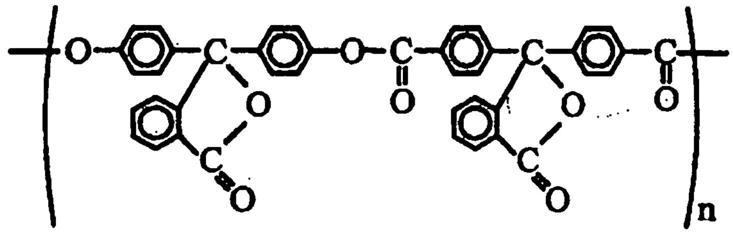

In one more embodiment, the electroactive polymer comprises elements of aromatic polyethers as the intermediate elements of the polymer chain.

In yet another embodiment, the electroactive polymer comprises elements of polyarylene etherketones as the intermediate elements of the polymer chain.

In yet another embodiment, the electroactive polymer possesses the following structure:

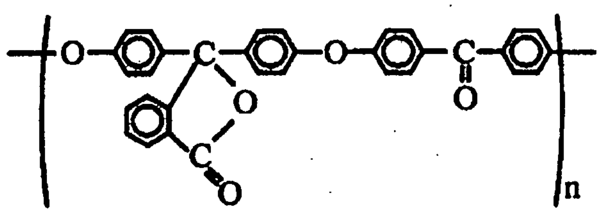

In yet another embodiment, the electroactive polymer possesses the following structure:

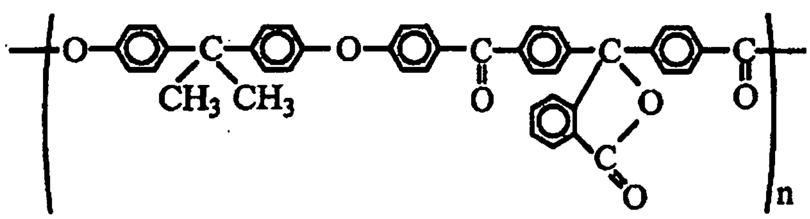

In yet another embodiment, the electroactive polymer possesses the following structure:

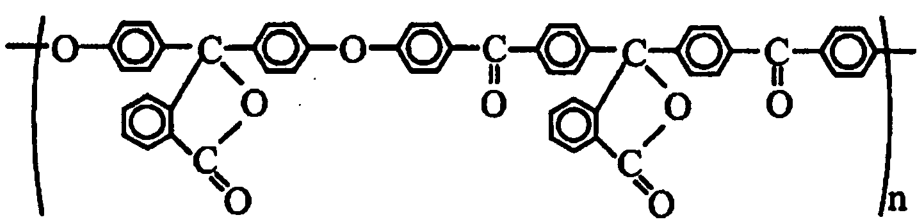

In yet another embodiment, the electroactive polymer possesses the following structure:

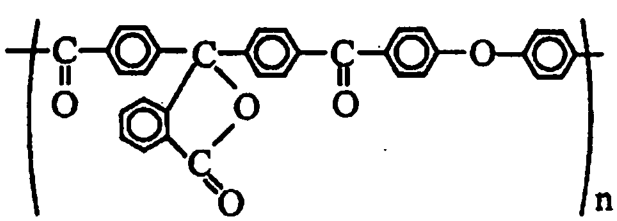

In another embodiment, the electroactive polymer comprises elements of polyarylene ethersulfons.

In yet another embodiment, the electroactive polymer possesses the following structure:

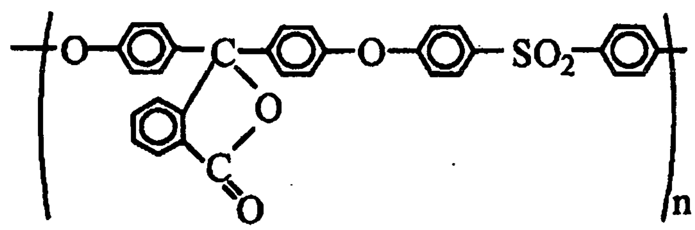

In another embodiment, the electroactive polymer comprises elements of polyarylene ketons as the intermediate elements of the polymer chain.

In yet another embodiment, the electroactive polymer possesses the following structure:

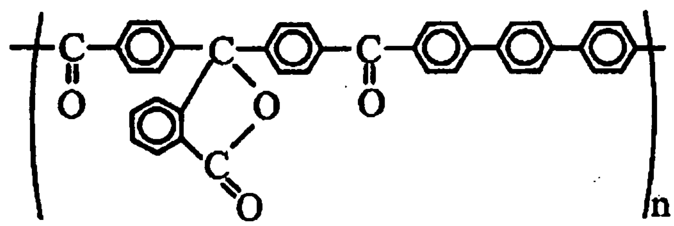

In another embodiment, the electroactive polymer comprises elements of polyarylene oxadiazoles as the intermediate elements of the polymer chain.

In yet another embodiment, the electroactive polymer possesses the following structure:

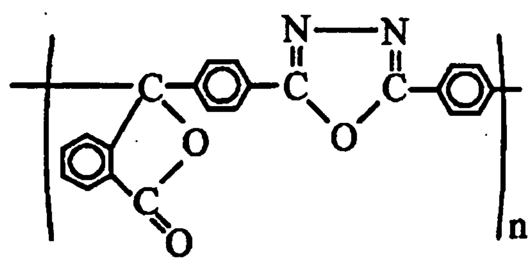

In another embodiment, the electroactive polymer comprises elements of polyarylene imides as the intermediate elements of the polymer chain.

In yet another embodiment, the electroactive polymer possesses the following structure:

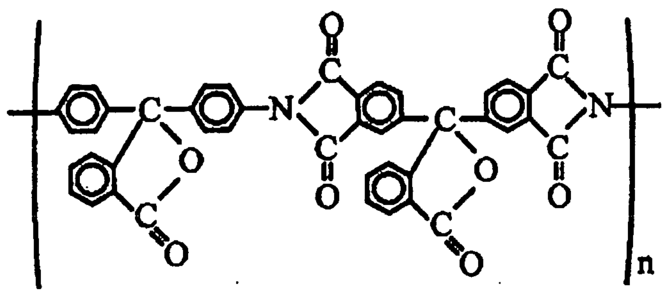

In another embodiment, the electroactive polymer comprises elements of hardened epoxy oligomer or diglicidylether as the intermediate elements of the polymer chain.

In yet another embodiment, the electroactive polymer possesses the following structure of the diglicidylether:

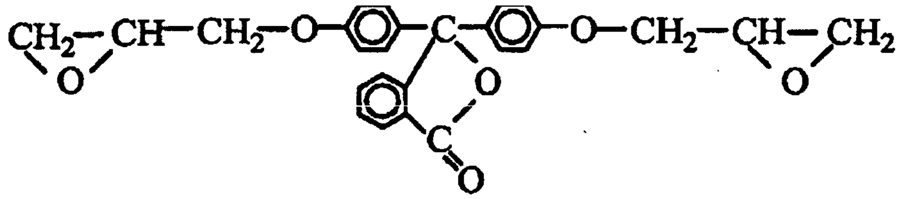

In another embodiment, the electroactive polymer comprises elements of hardened phenol-formaldehyde oligomer as the intermediate elements of the polymer chain.

In yet another embodiment, the electroactive polymer possesses the following structure of the phenol-formaldehyde oligomer: resol type formaldehyde oligomer based on phenol-phthalein.

In yet another embodiment, the electroactive polymer comprises 3,3'-diarylphthalide group as the molecular electroactive fragment being in the side branches of the main polymer chain, which branches comprising heteroatoms.

In yet another embodiment, the electroactive polymer comprises elements of aromatic polymers as the intermediate elements of the main polymer chain.

In yet another embodiment, the electroactive polymer possesses the following structure:

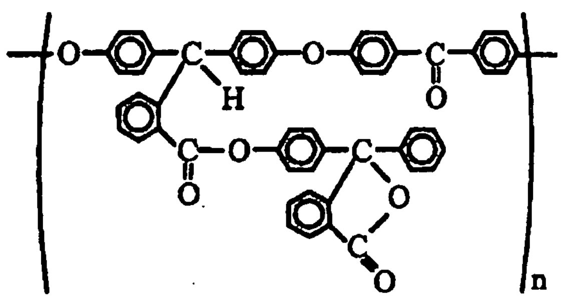

In yet another embodiment, the electroactive polymer possesses the following structure:

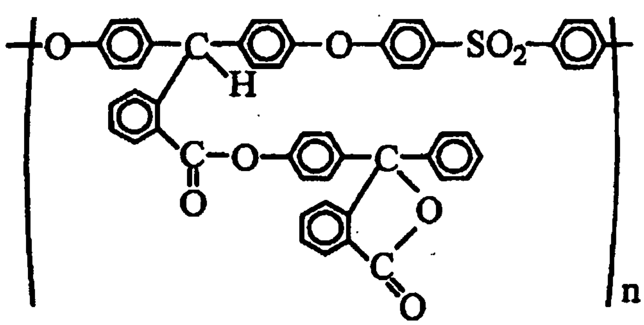

In another embodiment, the electroactive polymer comprises elements of aliphatic polymers as the intermediate elements of the main polymer chain.

In yet another embodiment, the electroactive polymer possesses the following structure:

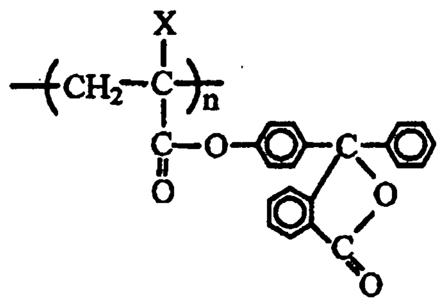

In another embodiment, the content of the electroactive fragments in the polymer chain is controlled by copolymer composition and, thereby, by length of intermediate elements of the polymer chain coupling the electroactive fragments each other.

In another embodiment, the electroactive polymer comprises elements of aromatic copolyesters as the intermediate elements of the polymer chain.

In yet another embodiment, the electroactive polymer possesses the following structure:

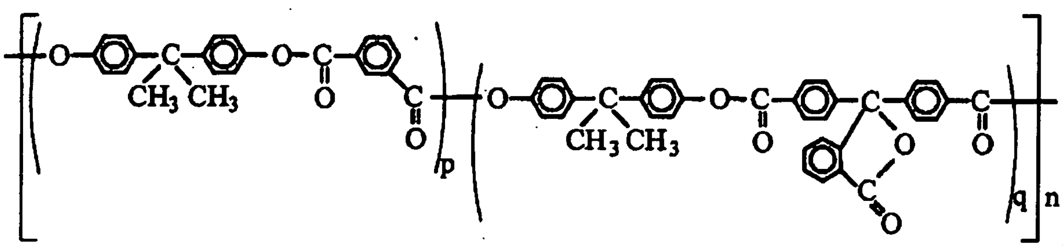

where p/q is from 0.5/0.5 to 0.9/0.1.

In yet another embodiment, the electroactive polymer possesses the following structure:

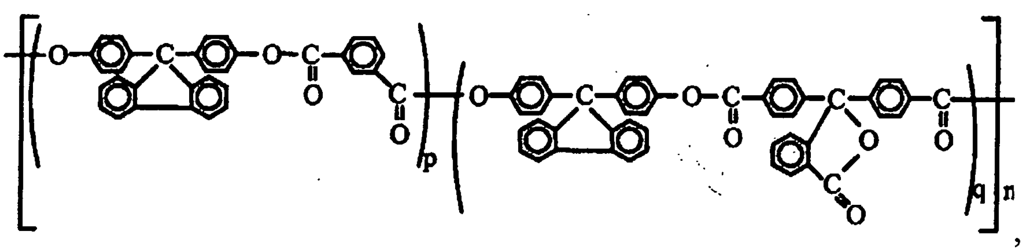

where p/q is from 0.5/0.5 to 0.9/0.1.

In yet another embodiment, the electroactive polymer possesses the following structure:

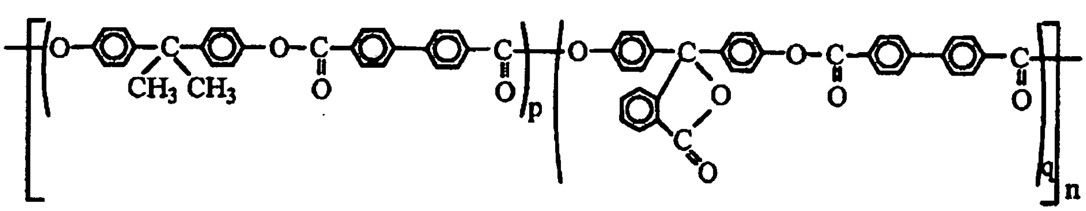

where p/q is from 0.5/0.5 to 0.9/0.1.

In yet another embodiment, the electroactive polymer possesses the following structure:

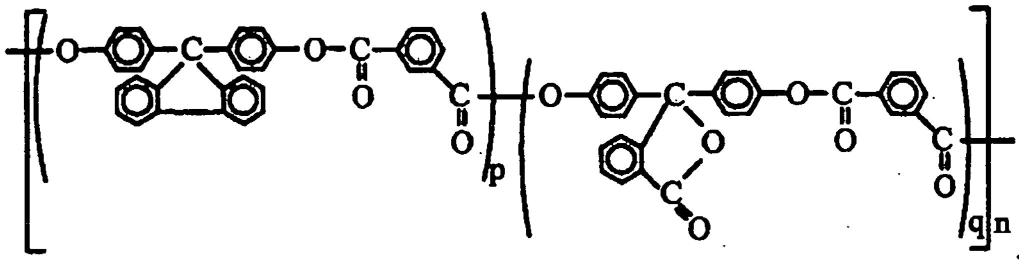

,

where p/q is from 0.5/0.5 to 0.95/0.05.

In yet another embodiment, the electroactive polymer possesses the following structure:

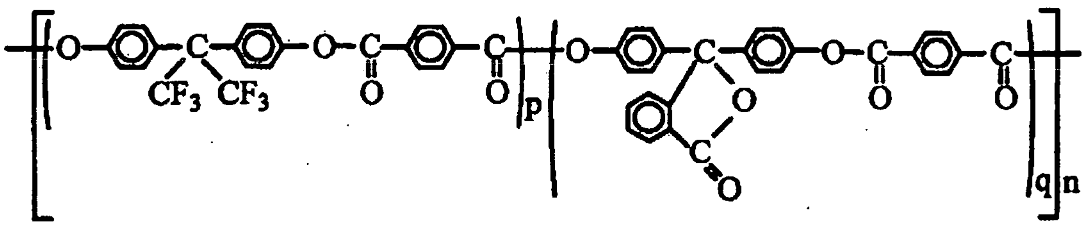

,

where p/q is from 0.5/0.5 to 0.9/0.1.

In yet another embodiment, the electroactive polymer possesses the following structure:

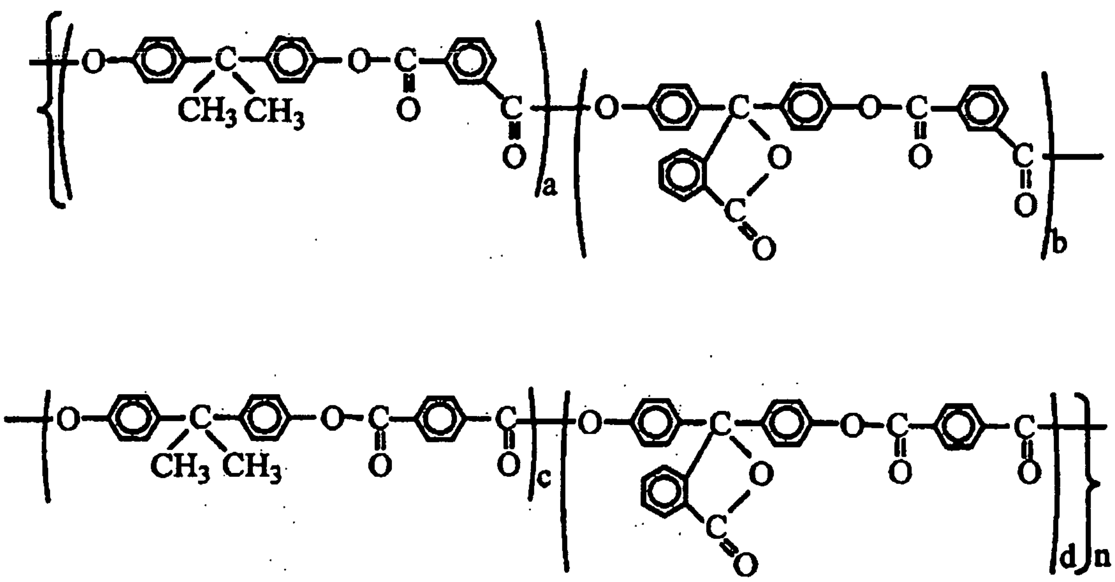

,

where (a+c)/(b+d) is from 0.5/0.5 to 0.95/0.05,

(a+b)/(c+d) is from 0.5/0.5 to 0.85/0.15.

In another embodiment, the electroactive polymer comprises elements of aromatic copolyethers as the intermediate elements of the polymer chain.

In another embodiment, the electroactive polymer comprises elements of copolyarylene etherketones.

In yet another embodiment, the electroactive polymer possesses the following structure:

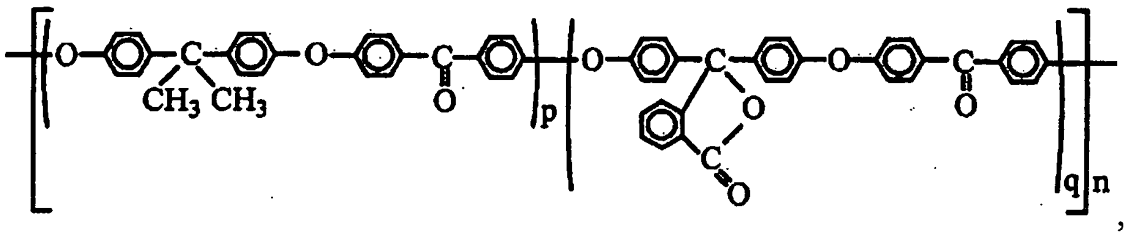

where p/q is from 0.5/0.5 to 0.95/0.05.

In yet another embodiment, the electroactive polymer possesses the following structure:

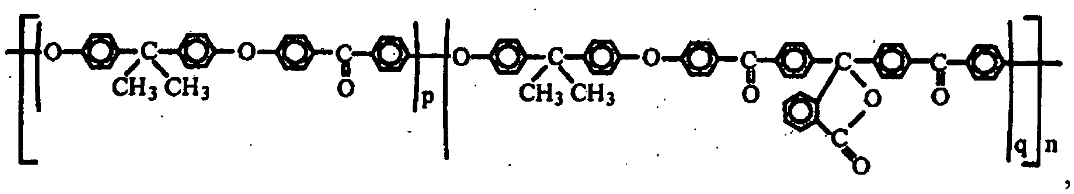

where p/q is from 0.5/0.5 to 0.95/0.05.

In yet another embodiment, the electroactive polymer possesses the following structure:

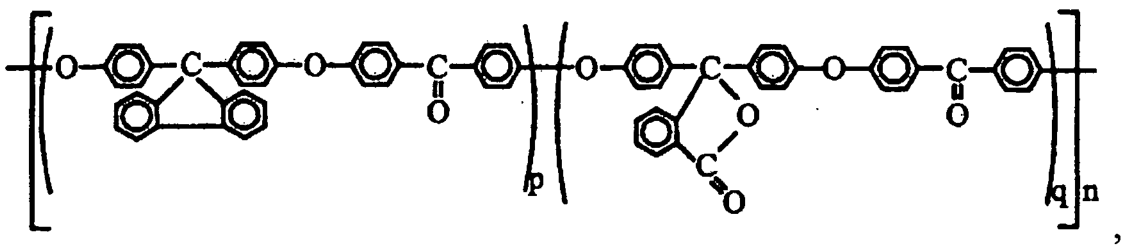

where p/q is from 0.5/0.5 to 0.95/0.05.

In yet another embodiment, the electroactive polymer possesses the following structure:

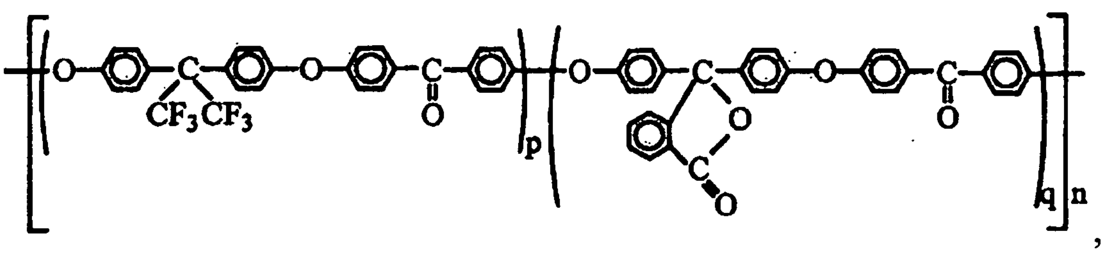

where p/q is from 0.5/0.5 to 0.9/0.1.

In another embodiment, the electroactive polymer comprises elements of copolyarylene ethersulfons as the intermediate elements of the polymer chain.

In yet another embodiment, the electroactive polymer possesses the following structure:

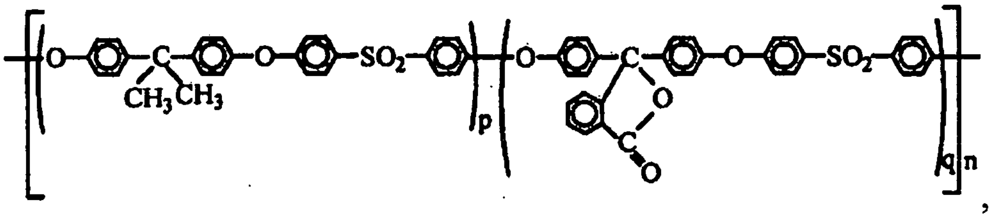

where p/q is from 0.5/0.5 to 0.9/0.1.

In another embodiment, the electroactive polymer comprises elements of hardened phenol-formaldehyde cooligomer as the intermediate elements of the polymer chain.

In yet another embodiment, the electroactive polymer possesses the following structure of the phenol-formaldehyde cooligomer: resol type formaldehyde cooligomer based on mixture of phenol with phenol-phthalein or fluorescein in the weight ratio of 40/60 to 95/5.

In another embodiment, the content of the electroactive fragments in the polymer chain is controlled by copolymer composition and, thereby, by length of intermediate elements of the polymer chain coupling the electroactive fragments each other, which intermediate elements disposed in the side branches.

In another embodiment, the electroactive polymer comprises elements of aromatic copolymers as the intermediate elements of the polymer chain.

In yet another embodiment, the electroactive polymer possesses the following structure:

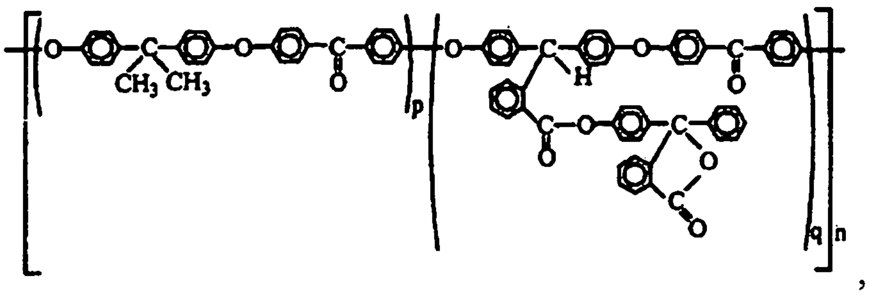

where p/q is from 0.5/0.5 to 0.95/0.05.

In yet another embodiment, the electroactive polymer possesses the following structure:

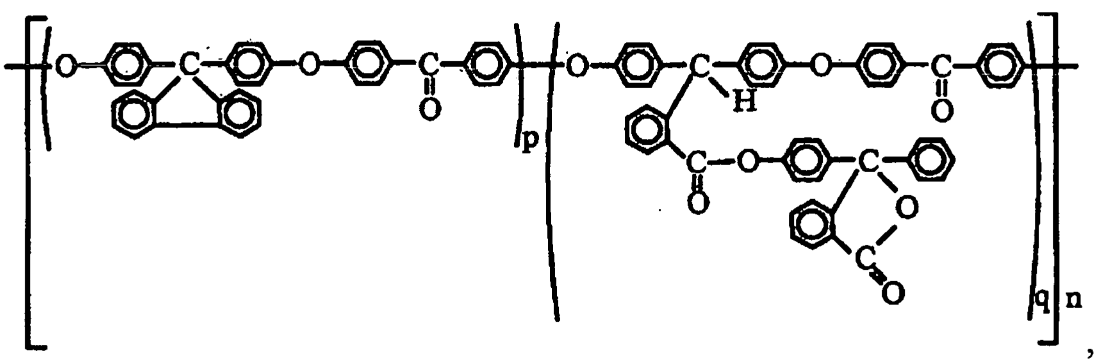

where p/q is from 0.5/0.5 to 0.9/0.1.

In yet another embodiment, the electroactive polymer possesses the following structure:

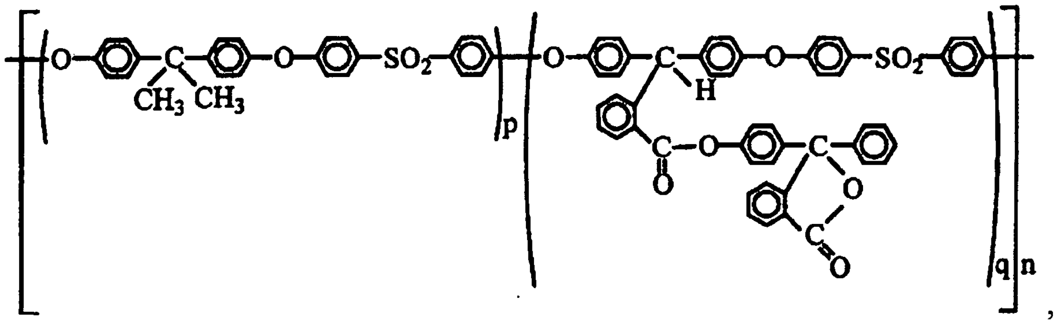

where p/q is from 0.5/0.5 to 0.9/0.1.

In another embodiment, the electroactive polymer comprises, as the molecular electroactive fragment of the main polymer chain, a fragment of 2,5-dibenzoyl terephthallic acid in both normal and cyclic isomeric forms.

In another embodiment, the electroactive polymer comprises elements of polynucleic aromatic hydrocarbons as the intermediate elements of the main polymer chain.

In yet another embodiment, the electroactive polymer possesses the following structure:

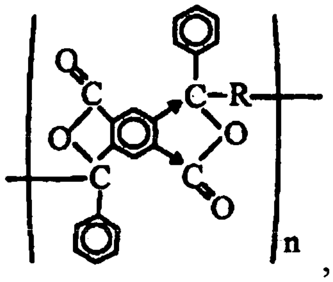

where R is, e.g., diphenyl, terphenyl, fluorene, anthracene, benzopyrene, pyrene, carbazole, dibenzofuran, dibenzothiophene.

In another embodiment, the electroactive polymer comprises elements of aromatic polyethers as the intermediate elements of the main polymer chain.

In yet another embodiment, the electroactive polymer possesses the following structure being characterized by a normal isomer form of ether:

the normal isomer form of ether:

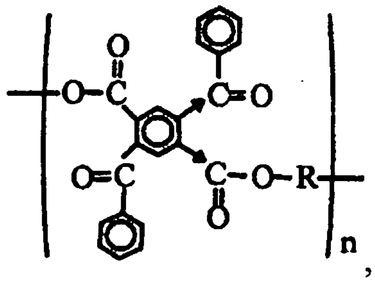

where R =

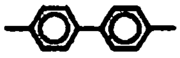 , 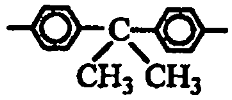 , 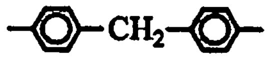 , 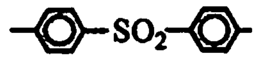

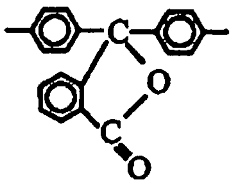 , 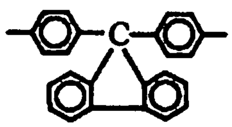

In yet another embodiment, the electroactive polymer possesses the following structure being characterized by an isomer form of ether:

the «cyclic» isomer form of ether, psuedo-ether:

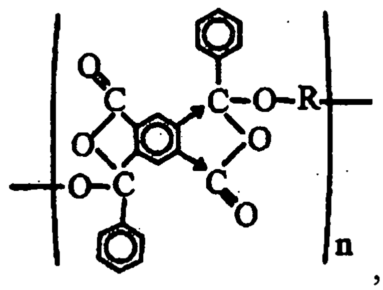 ,

where R =

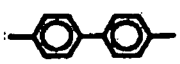 , 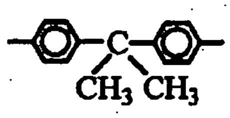 , 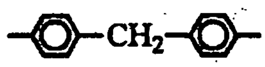 , 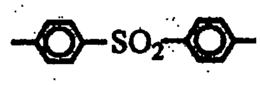

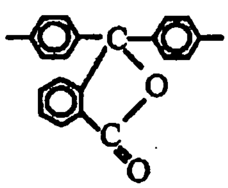 , 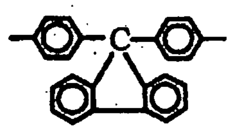

In yet another embodiment, the electroactive polymer possesses simultaneously elements of «normal» and «cyclic» isomer forms of ether with the following structure:

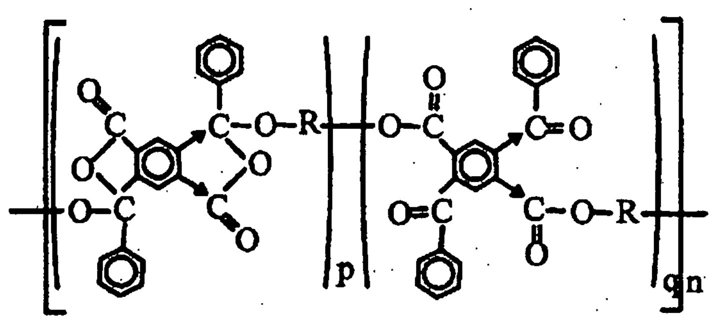 ,

where p/q is from 0.5/0.5 to 0.9/0.1.

In another embodiment, the electroactive polymer comprises, as the molecular electroactive fragment being in side branches of the main polymer chain, a fragment of o-benzoylbenzoic acid or ether thereof in both normal and cyclic isomeric forms.

In another embodiment, the electroactive polymer comprises elements of aromatic polymers as the intermediate elements of the main polymer chain.

In yet another embodiment, the electroactive polymer possesses the following structure:

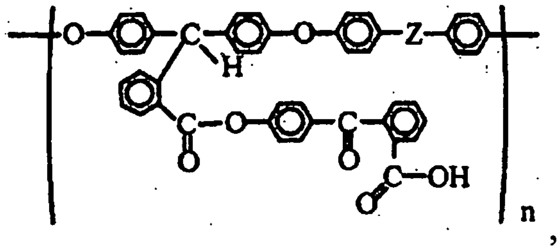

where Z = CO, $SO_2$.

In yet another embodiment, the electroactive polymer possesses the following structure:

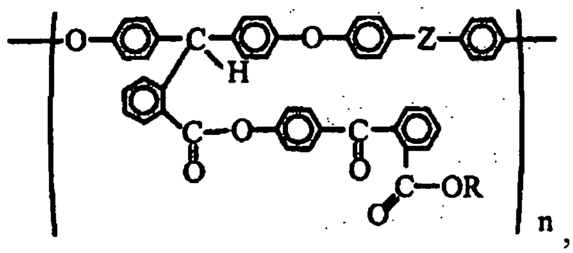

where Z = CO, $SO_2$; R = alkyl.

In yet another embodiment, the electroactive polymer possesses the following structure:

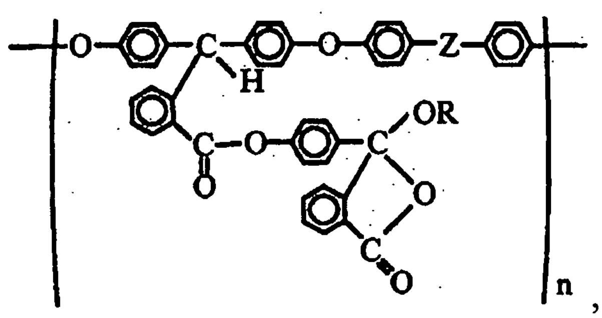

where Z = CO, $SO_2$; R = alkyl.

In another embodiment, the content of the electroactive fragments in the main polymer chain is controlled by copolymer composition and, thereby, by length of intermediate elements of the polymer chain coupling the electroactive fragments each other, which intermediate elements disposed in the side branches.

In another embodiment, the electroactive polymer comprises elements of aromatic copolymers as the intermediate elements of the main polymer chain.

In yet another embodiment, the electroactive polymer possesses the following structure:

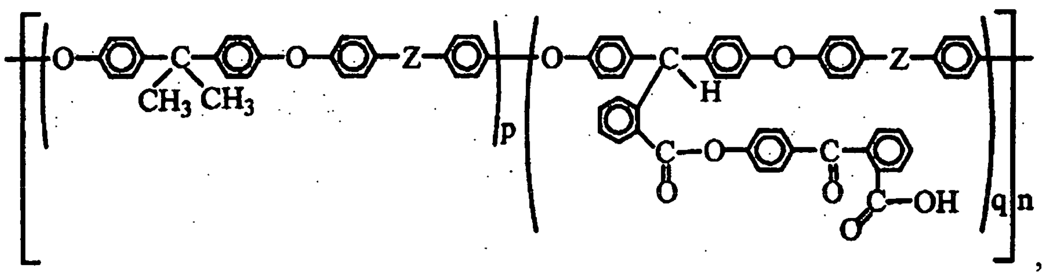

where Z = CO, $SO_2$; p/q is from 0.5/0.5 to 0.9/0.1.

In yet another embodiment, the electroactive polymer possesses the following structure:

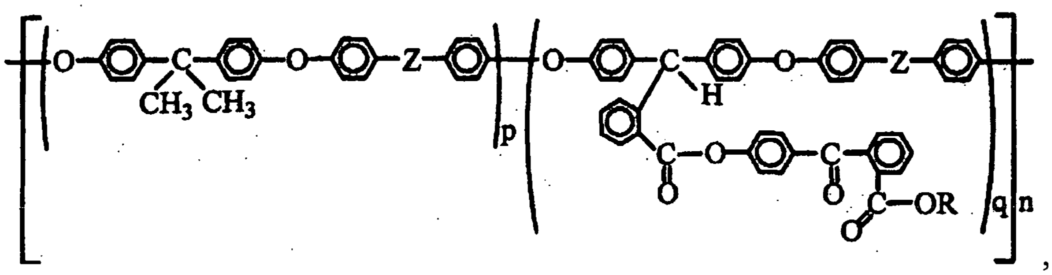

where Z = CO, $SO_2$; p/q is from 0.5/0.5 to 0.9/0.1; R = alkyl.

In yet another embodiment, the electroactive polymer possesses the following structure:

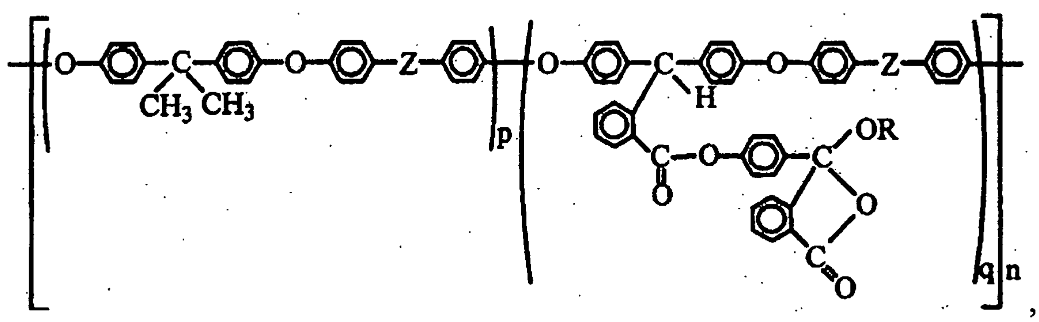

where Z = CO, $SO_2$; p/q is from 0.5/0.5 to 0.9/0.1; R = alkyl.

In another embodiment, the electroactive polymer comprises, as the molecular electroactive fragment of the main polymer chain, the sulfophthalide group.

In another embodiment, the electroactive polymer comprises elements of polynucleic aromatic hydrocarbons as the intermediate elements of the main polymer chain.

In yet another embodiment, the electroactive polymer possesses the following structure:

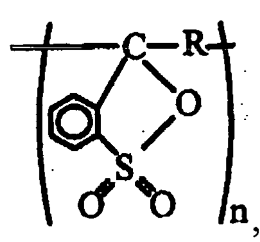

where R =

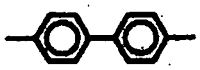, 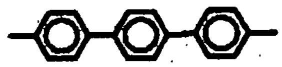, 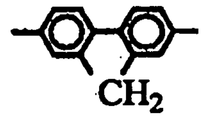

In another embodiment, the electroactive polymer comprises, as the molecular electroactive fragment of the main polymer chain, the phthalimidine group.

In another embodiment, the electroactive polymer comprises elements of polynucleic aromatic hydrocarbons as the intermediate elements of the main polymer chain.

In yet another embodiment, the electroactive polymer possesses the following structure:

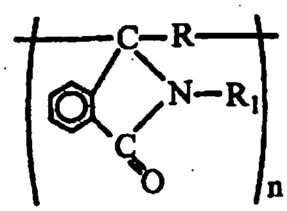,

where R =

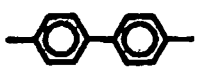, 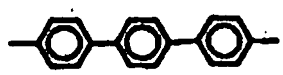

$R_1$ =

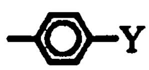

Y = H, $CH_3$, Cl,

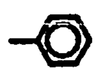

In another embodiment, the electroactive polymer comprises elements of aromatic polyesters as the intermediate elements of the main polymer chain.

In yet another embodiment, the electroactive polymer possesses the following structure:

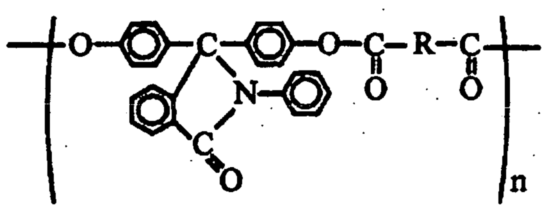,

where R =

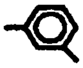 , 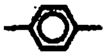 , 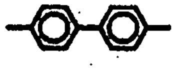 , 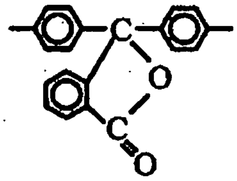 , 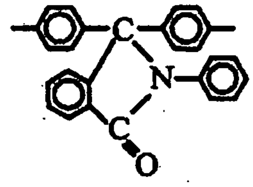

In another embodiment, the electroactive polymer comprises elements of aromatic polyethers as the intermediate elements of the main polymer chain.

In yet another embodiment, the electroactive polymer possesses the following structure:

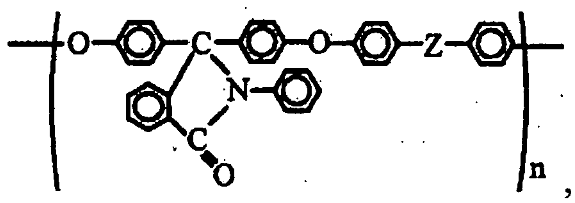 ,

where Z = CO, $SO_2$.

In another embodiment, the material based on said polymers being implemented in the form of films, or fibers, or coatings, or bodies or revolution, wherein at least one of geometrical sizes defining a material form does not exceed a double depth of penetration of surface charge.

In order to produce the polymer material, the electroactive polymer is converted into a liquid aggregate state, for example, dissolving it in a suitable solvent or heating it, then the solution/liquid is poured off into a necessary form, and the solvent is deleted / the liquid is hardened, subjecting the solution/liquid to a necessary physical-chemical impact.

A physical mechanism for realizing the claimed invention is as follows. It is well known [Т. Мирдель. Электрофизика. Пер с нем. — М.: Мир, 1972. - С. 608 (*in Russian*)] that in order to obtain a high conductivity, it is necessary to have a material which electronic energy structure allows to transfer effectively a charge in electric field. Moreover, it is necessary that charge carrier concentration in this material should be rather high for obtaining a required current density.

Electric conducting polymers are known Ж. Симон, Ж.-Ж. Андре. Молекулярные полупроводники. Пер. с англ. — М.: Мир, 1988. - 344 с. (in Russian)] which electronic energy structure is set by a chemical structure of macromolecule, and a high electric conduction is ensured by introducing into the polymer material the special low molecular substances, dopants, increasing the concentration of free charge carriers. Generally, such polymer materials have a relatively small width of forbidden band less than 2 eV.

Known is the alternative mechanism for forming charge transfer levels in wide-band organic materials, which could be polymers, by creating deep electron states in them [M. Поуп, Ч. Свенберг. Электронные процессы в органических кристаллах. Пер. с англ. — М.: Мир, 1985. — 464 с. *(in Russian)].* This mechanism supposes steps of: introducing an excess electron into the material, joining (capturing) this electron by a macromolecule fragment, the so called molecule trap, through the energy of electron affinity. This process is accompanied by changing position of energy levels of macromolecule electron subsystem due to a strong polarizability of organic medium so that the new position of electron levels is near the middle of forbidden energy gap.

To realize this mechanism, macromolecules are required, which include atom groups possessing a great polarizability, and/or which electron structure possesses a bistable property. The latter implies that atom group can have two geometric conformations divided by relatively small potential barrier, a transition between which conformations could be implemented by capturing or emitting an excess electron. These properties are inherent to, for example, some phthalide comprising compositions, particularly phenol-phthalein Индикаторы, под ред. Э. Бишопа, пер. с англ. - М.: Мир, 1976. - Т. 1, с. 496 (*in Russian*)]. Electron properties of this compound are explained by presence of two quinoide ring structures transiting each other

and two negative charges, i.e., by polar properties of molecule [P. Ramart-Lucas, Compt. Rend., 208, 1312 (1939)]. Experimental [Fabish T.J., Satsburg H.M., Hair M.L. Charge transfer in metal/atactic polystyrene contacts // Journal of Applied Physics. 1976. V. 47. No. 3. P. 930-939] and theoretic [Duke C.B. and Fabish T.J. Charge-Induced Relaxation in Polymers // Physical Review Letters. 1976. V. 37. No. 16. P. 1075-10780 studies showed that when capturing an excess electron injected, for example, into a polymer from a metal electrode, additional levels of electron states are appeared in the polymer forbidden band. Density of such electron states can be made sufficiently high so that an overlap of their wave functions occurs. It is known from literature sources H. Мотт. Электроны в неупорядоченных системах. Пер с англ. — М.: Мир, 1969. - 240 с. (*in Russian*)] that the overlap of wave function of individual electron states can occur providing the distance between them is less than 50 A. In this case, a narrow zone of coherent charge transfer can arise, and the material will turn from the dielectric state into the metal one. There is a consequence from the above criterion of maximal distance (50 A) that a minimal concentration of active groups of atoms in a macromolecule must exist, which concentration ensuring that distance, and in the case of concentration less than the above one, the positive effect of transition into the metal state is not achieved. The carried out tests showed that this concentration is of 2 % to 5 % for various compounds.

To create excess charge in the polymer material comprising atom groups having a high polarizability and/or bistable electronic structure, can be used methods of, e.g., injecting charges from electrodes, irradiating by charged particle stream, ionizing natural and impurity charge traps, changing a density of surface and volumetric charge because of interaction of the polymer dielectric with phase separation boundaries of various nature, for example, metal-polymer, polymer-polymer, liquid-polymer, semiconductor-polymer, etc.

Thus, in the polymer material having a suitable chemical molecular structure and initially wide forbidden band and being therefore a dielectric, it is possible to create conditions for reversible change of electric conduction using external physical fields without recourse to the method of chemical doping.

## Implementation of the Invention

Example. In order to obtain the polymer material, 0.5 g of aromatic polyester (polyarylate) based on phenolphthalein and terephthalic acid (see No. 1 in the Table 1) was dissolved in 5 ml of cyclohexane until obtaining a uniform solution, the obtained solution was deposited onto a flat, optically polished substrate surface so that it is entirely cover by the solution. The substrate was fixed at an ultra-centrifuge axle that was set in motion. The rotational rate of the centrifuge axle was 2500 rpm. After the centrifugation, the procedure of additional purification was carried out at 150 °C during 30 minutes in order to delete solvent residuals from the polymer material. Selection of such a mode was specified by individual properties of material from this polymer and is based on studying data of thermo-gravimetric analysis which has shown that, when decreasing temperature, it failed to delete completely the solvent residuals even through increasing the time of drying, and the procedure duration is defined by the fact that its increasing does not lead to decreasing concentration of solvent residuals. When increasing temperature and increasing the time of drying, the weight loss of polymer film ceases owing to deleting the solvent from the film, and there are no improvements of physical-chemical parameters of the material, and so this temperature increasing seems to be inexpedient.

## Results of the Experiments

Results of particular realization of the polymer material and experiments carried out are shown in the Table 1. As the parameter defining the polymer material sensitivity to an external impact, the material electric conduction sensitivity to a uniaxial pressure ($\alpha$), since this parameter had been previously used in patent sources and science literature. In order to obtain the objective estimation of the obtained results, a coefficient ($\beta$) is included into the sensitivity calculation formula. This coefficient corresponds to the maximal thickness of film, beyond which the positive effect is not achieved. Thus, the electric conduction sensitivity parameter of the material to the uniaxial pressure was defined according to following equation:

$$\alpha = \beta \lg (R_1/R_0),$$

where $R_0$ is the electrical resistance of the film polymer material in the absence of pressure, $R_1$ is the electrical resistance of the film polymer material in the presence of pressure, $\beta$ is the dimensionless coefficient determined from experiment, which is equal numerically to maximal thickness of film, beyond which the positive effect is not observed.

Table 1

| No | Polymer name | Information on chemical structure of material | Maximal thickness of polymer material (μm) | Electric conduction sensitivity α to pressure (see Notes) | Relative sensitivity of material (see Notes) |
|---|---|---|---|---|---|
| 1. | Polyarylate of Cl. 4 | 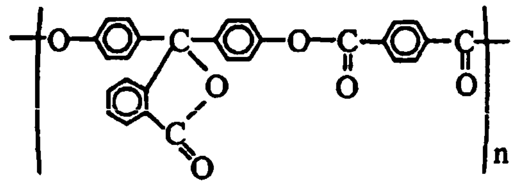 | 3 | 33 | 4 |
| 2. | Polyarylate of Cl. 6 | 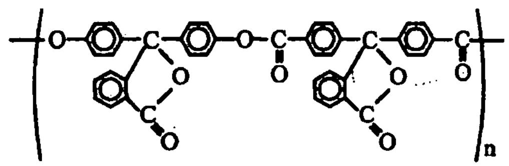 | 8 | 78 | 6.5 |
| 3. | Polyarylene etherketon of Cl. 9 | 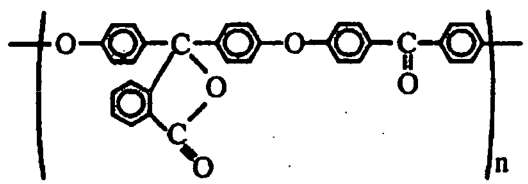 | 3 | 27 | 3.2 |
| 4. | Polyarylene etherketon of C1. 10 | 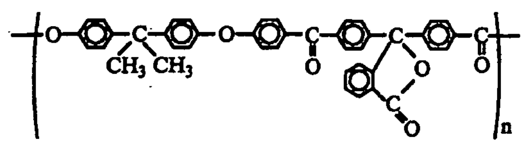 | 2 | 22 | 1.5 |

(continued)

| No | Polymer name | Information on chemical structure of material | Maximal thickness of polymer material (μm) | Electric conduction sensitivity α to pressure (see Notes) | Relative sensitivity of material (see Notes) |
|---|---|---|---|---|---|
| 5. | Polyarylene etherketon of Cl. 11 | 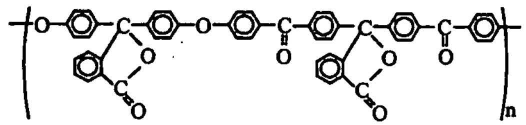 | 2 | 22 | 1.6 |
| 6. | Polyarylene etherketon of Cl. 27 | 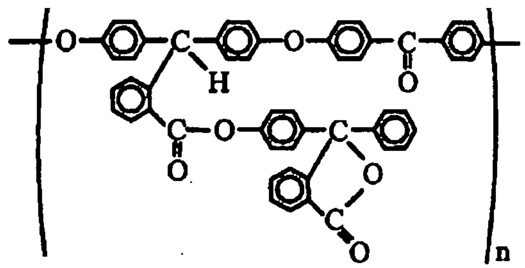 | 6 | 54 | 4.5 |
| 7. | Polyethersulfone of Cl. 14 | 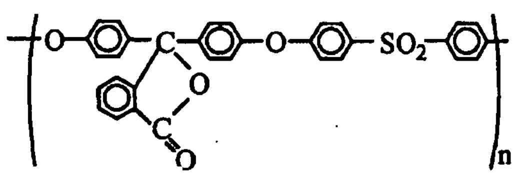 | 8 | 72 | 6.5 |
| 8. | Polyimide of Cl. 20 | 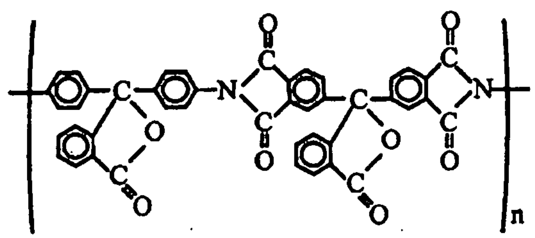 | 10 | 110 | 10.5 |

(continued)

| No | Polymer name | Information on chemical structure of material | Maximal thickness of polymer material (μm) | Electric conduction sensitivity α to pressure (see Notes) | Relative sensitivity of material (see Notes) |
|---|---|---|---|---|---|
| 9. | Phenol-formaldehyde resin of Cl. 48 | Resol type cooligomers obtained by polycondensating formaldehyde with phenol and phenol-phthalein at weight ratio phenol and phenol-phthalein of 60/40 | 14 | 140 | 15 |
| 10. | Phenol-formaldehyde resin of Cl. 48 | Resol type cooligomers obtained by polycondensating formaldehyde with phenol and phenol-phthalein at weight ratio phenol and phenol-phthalein of 80/20 | 6 | 68 | 5 |
| 11. | Phenol-formaldehyde resin of Cl. 48 | Resol type cooligomers obtained by polycondensating formaldehyde with phenol and phenol-phthalein at weight ratio phenol and phenol-phthalein of 95/5 | 5 | 56 | 4.5 |

Notes

1. The electric conduction sensitivity α to pressure is defined so as: $\alpha = \beta \cdot 1g (R_1 / R_0)$, where $R_0$ is the electrical resistance of the film polymer material in the absence of pressure, $R_1$ is the electrical resistance of the film polymer material in the presence of pressure, β is the dimensionless coefficient determined from experiment, which is equal numerically to maximal thickness of film, beyond which the positive effect is not observed.
2. Relative sensitivity of the material was determined as the ratio of parameter $\alpha_1$ to the same parameter $\alpha_2$ of the known material (RU 2006078, Int. $Cl.^5$ H01B 1/06, Off. Gazette No. 1, 15.01.1994] both calculated according to the above equation set in the Notes paragraph 1.

**Claims**

1. An electroactive polymer with electric conduction depending on external physical fields, which material comprises molecular electroactive fragments possessing a high polarizability and/or bistable electronic energy structure with respect to a process of excess electron capture, and said molecular electroactive fragments are in the main polymer chain or in side branches of the main polymer chain and are bound in between via respective intermediate elements of the molecular chain.

2. The electroactive polymer according to Claim 1, ***characterized*** **in that** the electroactive polymer comprises a phthalide group as the molecular electroactive fragment of the main polymer chain, and elements of aromatic polymers comprising heteroatoms — oxygen, nitrogen, sulfur, as the intermediate elements of the polymer chain.

3. The electroactive polymer according to Claim 2, ***characterized*** **in that** the electroactive polymer comprises elements of aromatic polyesters — polyarylates, as the intermediate elements of the polymer chain.

4. The electroactive polymer according to Claim 3, ***characterized*** **in** the following structure:

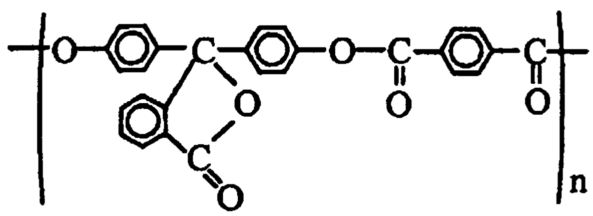

5. The electroactive polymer according to Claim 3, ***characterized*** **in** the following structure:

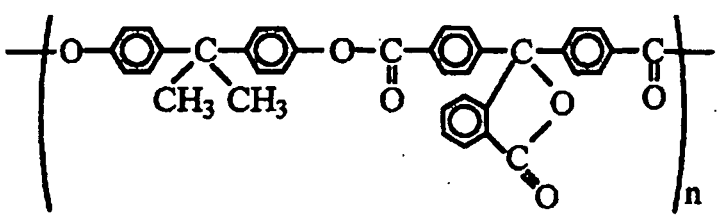

6. The electroactive polymer according to Claim 3, ***characterized*** **in** the following structure:

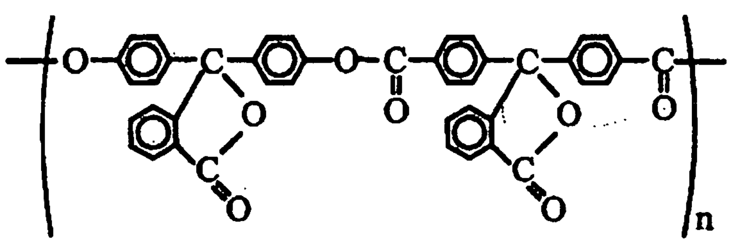

7. The electroactive polymer according to Claim 2, ***characterized*** **in that** the electroactive polymer comprises elements of aromatic polyethers as the intermediate elements of the polymer chain.

8. The electroactive polymer according to Claim 7, ***characterized*** **in that** the electroactive polymer comprises elements of polyarylene etherketons as the intermediate elements of the polymer chain.

9. The electroactive polymer according to Claim 8, ***characterized*** **in** the following structure:

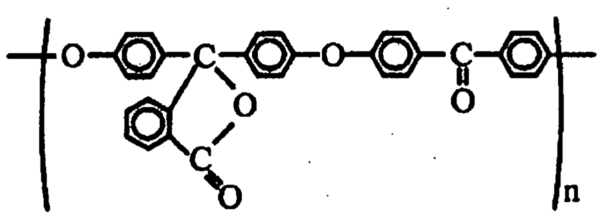

10. The electroactive polymer according to Claim 8, ***characterized*** **in** the following structure:

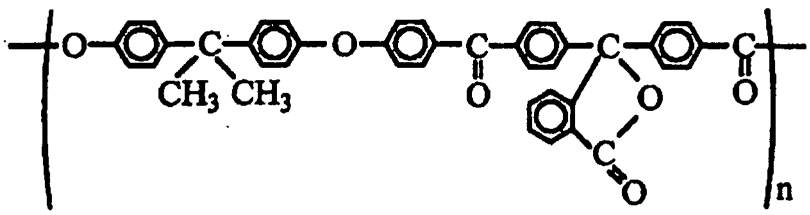

11. The electroactive polymer according to Claim 8, ***characterized*** **in** the following structure:

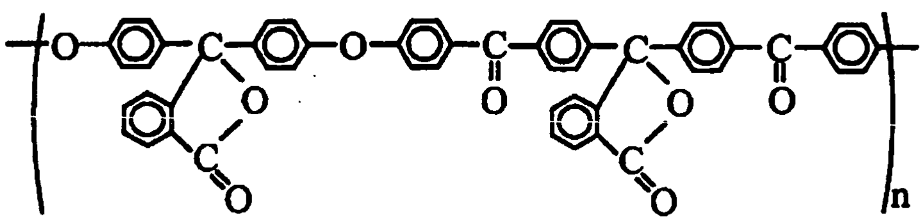

12. The electroactive polymer according to Claim 8, ***characterized*** **in** the following structure:

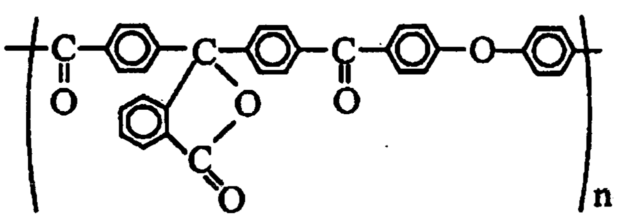

13. The electroactive polymer according to Claim 7, ***characterized*** **in that** the electroactive polymer comprises elements of polyarylene ethersulfones.

14. The electroactive polymer according to Claim 2, ***characterized*** **in** the following structure:

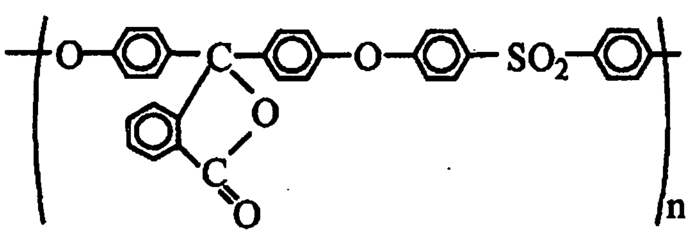

**15.** The electroactive polymer according to Claim 2, ***characterized* in that** the electroactive polymer comprises elements of polyaryleneketones as the intermediate elements of the polymer chain.

**16.** The electroactive polymer according to Claim 15, ***characterized* in** the following structure:

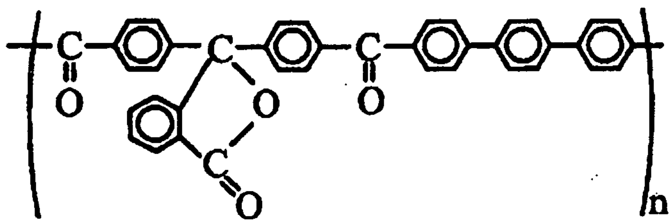

**17.** The electroactive polymer according to Claim 2, ***characterized* in that** the electroactive polymer comprises elements of polyarylene oxadiazoles as the intermediate elements of the polymer chain.

**18.** The electroactive polymer according to Claim 17, ***characterized* in** the following structure:

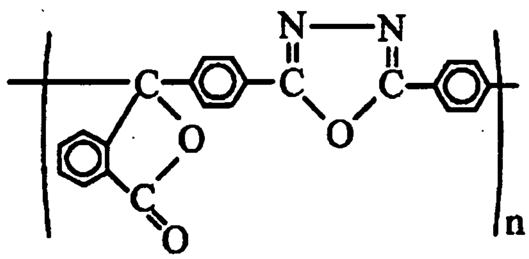

**19.** The electroactive polymer according to Claim 2, ***characterized* in that** the electroactive polymer comprises elements of polyarylene imides as the intermediate elements of the polymer chain.

**20.** The electroactive polymer according to Claim 19, ***characterized* in** the following structure:

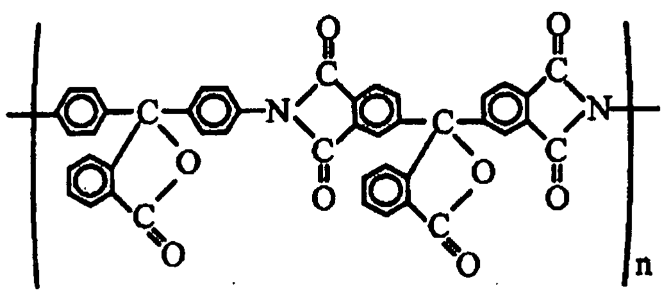

**21.** The electroactive polymer according to Claim 2, ***characterized* in that** the electroactive polymer comprises elements of hardened epoxy oligomer or diglicidylether as the intermediate elements of the polymer chain.

**22.** The electroactive polymer according to Claim 2, ***characterized* in** the following structure of the diglicidylether:

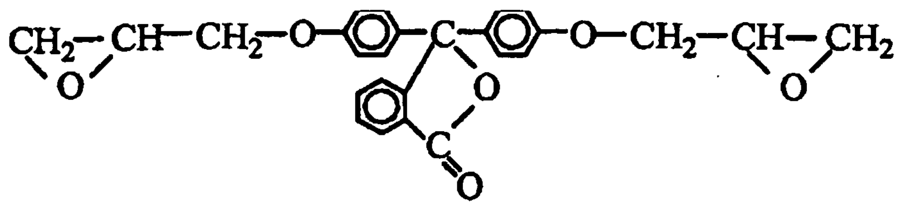

23. The electroactive polymer according to Claim 2, ***characterized* in that** the electroactive polymer comprises elements of hardened phenol-formaldehyde oligomer as the intermediate elements of the polymer chain.

24. The electroactive polymer according to Claim 23, ***characterized* by** the following structure of the phenol-formaldehyde oligomer: resol type formaldehyde oligomer based on phenol-phthalein.

25. The electroactive polymer according to Claim 1, ***characterized* in that** the electroactive polymer comprises 3,3'-diarylphthalide group as the molecular electroactive fragment being in the side branches of the main polymer chain, which branches comprising heteroatoms.

26. The electroactive polymer according to Claim 25, ***characterized* in that** the electroactive polymer comprises elements of aromatic polymers as the intermediate elements of the main polymer chain.

27. The electroactive polymer according to Claim 26, ***characterized* in** the following structure:

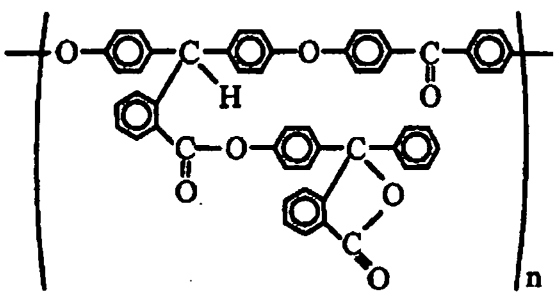

28. The electroactive polymer according to Claim 26, ***characterized* in** the following structure:

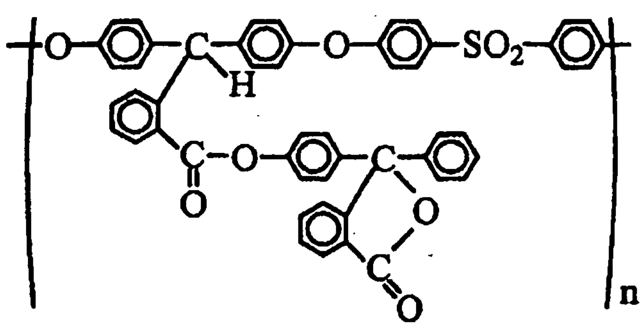

29. The electroactive polymer according to Claim 25, ***characterized* in that** the electroactive polymer comprises elements of aliphatic polymers as the intermediate elements of the main polymer chain.

30. The electroactive polymer according to Claim 29, ***characterized* in** the following structure:

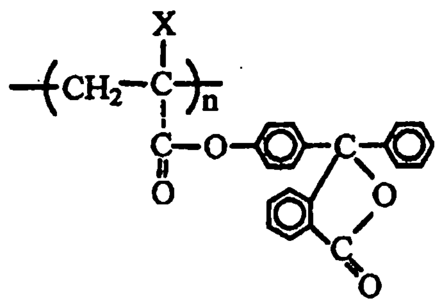

**31.** The electroactive polymer according to Claim 2, ***characterized* in that** the content of the electroactive fragments in the polymer chain is controlled by copolymer composition and, thereby, by length of intermediate elements of the polymer chain coupling the electroactive fragments each other.

**32.** The electroactive polymer according to Claim 31, ***characterized* in that** the electroactive polymer comprises elements of aromatic polyesters as the intermediate elements of the polymer chain.

**33.** The electroactive polymer according to Claim 29, ***characterized* in** the following structure:

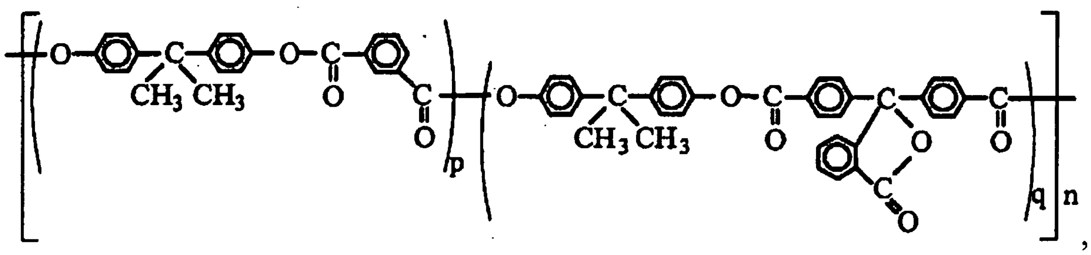

where p/q is from 0.5/0.5 to 0.9/0.1.

**34.** The electroactive polymer according to Claim 29, ***characterized* in** the following structure:

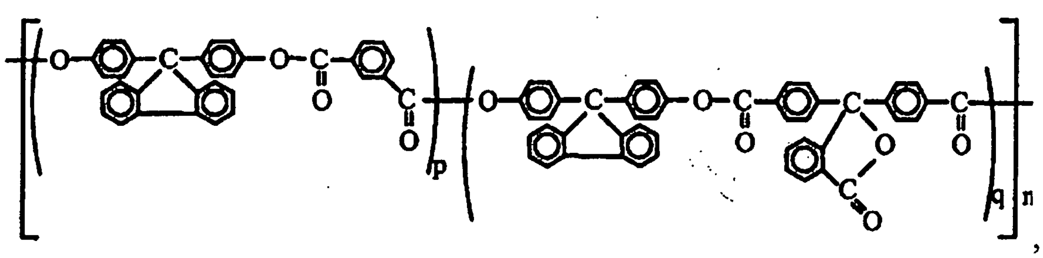

where p/q is from 0.5/0.5 to 0.9/0.1.

**35.** The electroactive polymer according to Claim 29, ***characterized* in** the following structure:

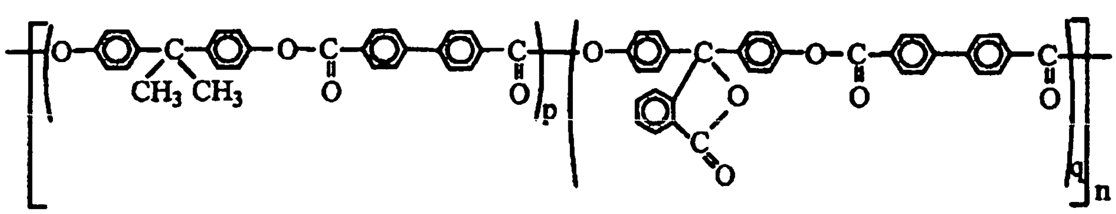

where p/q is from 0.5/0.5 to 0.9/0.1.

**36.** The electroactive polymer according to Claim 29, ***characterized*** **in** the following structure:

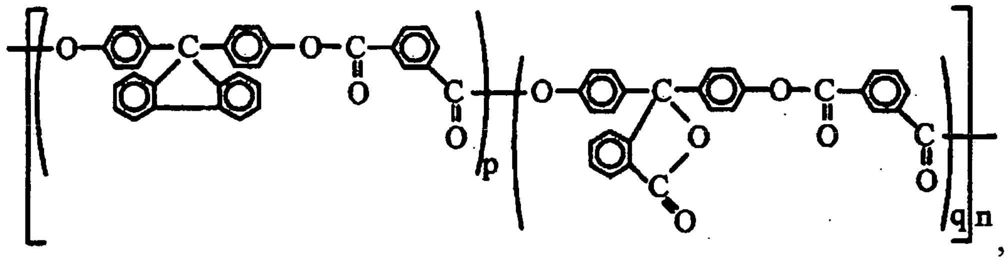

where p/q is from 0.5/0.5 to 0.95/0.05.

**37.** The electroactive polymer according to Claim 29, ***characterized*** **in** the following structure:

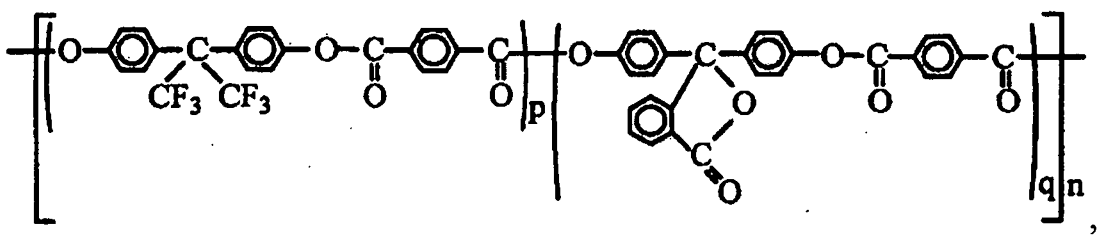

where p/q is from 0.5/0.5 to 0.9/0.1.

**38.** The electroactive polymer according to Claim 29, ***characterized*** **in** the following structure:

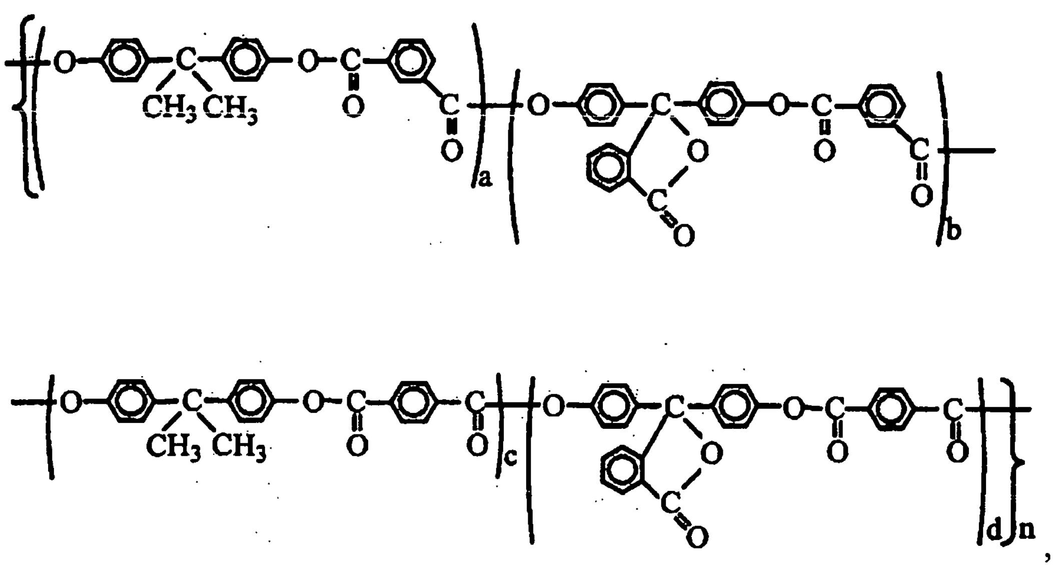

where (a+c)/(b+d) is from 0.5/0.5 to 0.95/0.05,
(a+b)/(c+d) is from 0.5/0.5 to 0.85/0.15.

**39.** The electroactive polymer according to Claim 31, ***characterized*** **in that** the electroactive polymer comprises elements of aromatic copolyethers as the intermediate elements of the polymer chain.

**40.** The electroactive polymer according to Claim 39, ***characterized*** **in that** the electroactive polymer comprises elements of copolyarylene etherketons.

**41.** The electroactive polymer according to Claim 40, ***characterized* in** the following structure:

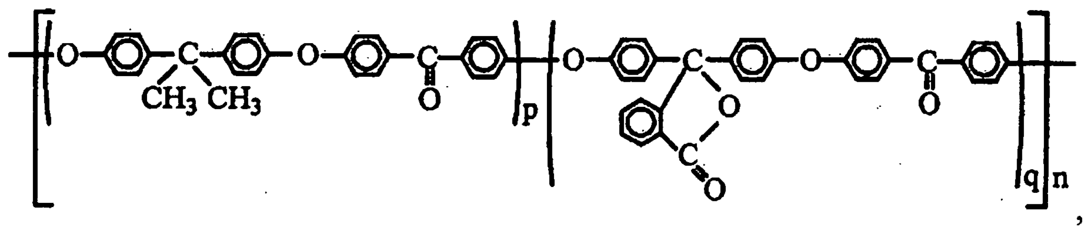

where p/q is from 0.5/0.5 to 0.95/0.05.

**42.** The electroactive polymer according to Claim 40, ***characterized* in** the following structure:

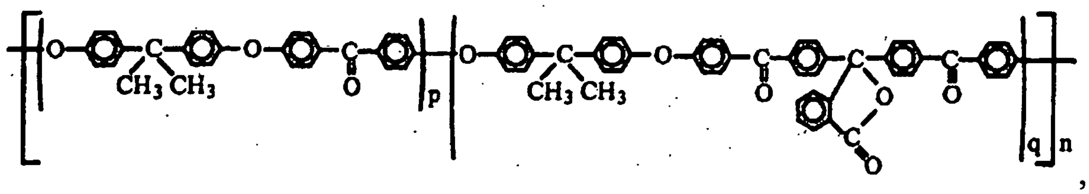

where p/q is from 0.5/0.5 to 0.95/0.05.

**43.** The electroactive polymer according to Claim 40, ***characterized* in** the following structure:

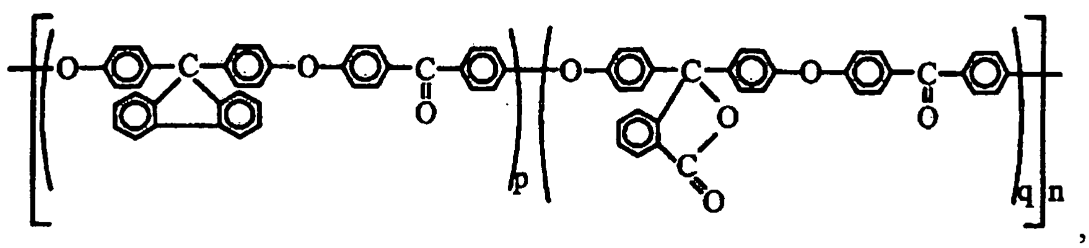

where p/q is from 0.5/0.5 to 0.95/0.05.

**44.** The electroactive polymer according to Claim 40, ***characterized* in** the following structure:

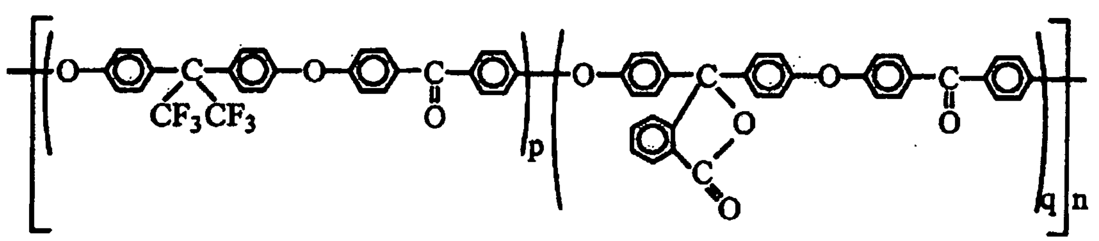

where p/q is from 0.5/0.5 to 0.9/0.1.

**45.** The electroactive polymer according to Claim 39, ***characterized* in that** the electroactive polymer comprises elements of copolyarylene ethersulfons as the intermediate elements of the polymer chain.

**46.** The electroactive polymer according to Claim 45, ***characterized* in** the following structure:

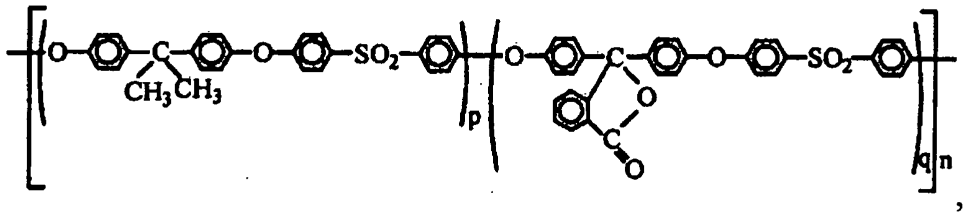

where p/q is from 0.5/0.5 to 0.9/0.1.

**47.** The electroactive polymer according to Claim 31, ***characterized* in that** the electroactive polymer comprises elements of hardened phenol-formaldehyde cooligomer as the intermediate elements of the polymer chain.

**48.** The electroactive polymer according to Claim 47, ***characterized* by** the following structure of the phenol-formaldehyde cooligomer: resol type formaldehyde cooligomer based on mixture of phenol with phenol-phthalein or fluorescein in the weight ratio of 40/60 to 95/5.

**49.** The electroactive polymer according to Claim 25, ***characterized* in that** the content of the electroactive fragments in the polymer chain is controlled by copolymer composition and, thereby, by length of intermediate elements of the polymer chain coupling the electroactive fragments each other, which intermediate elements disposed in the side branches.

**50.** The electroactive polymer according to Claim 49, ***characterized* in that** the electroactive polymer comprises elements of aromatic copolymers as the intermediate elements of the polymer chain.

**51.** The electroactive polymer according to Claim 50, ***characterized* in** the following structure:

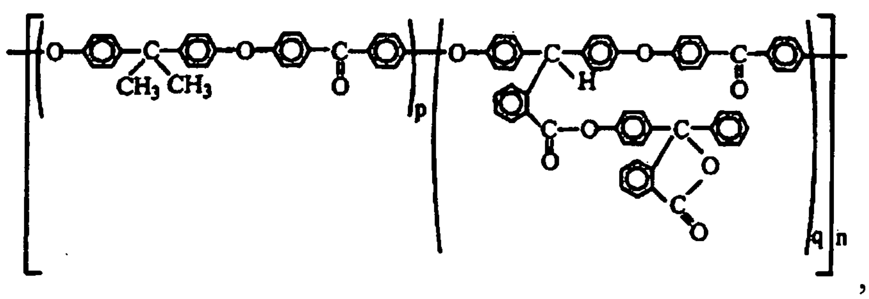

where p/q is from 0.5/0.5 to 0.95/0.05.

**52.** The electroactive polymer according to Claim 50, ***characterized* in** the following structure:

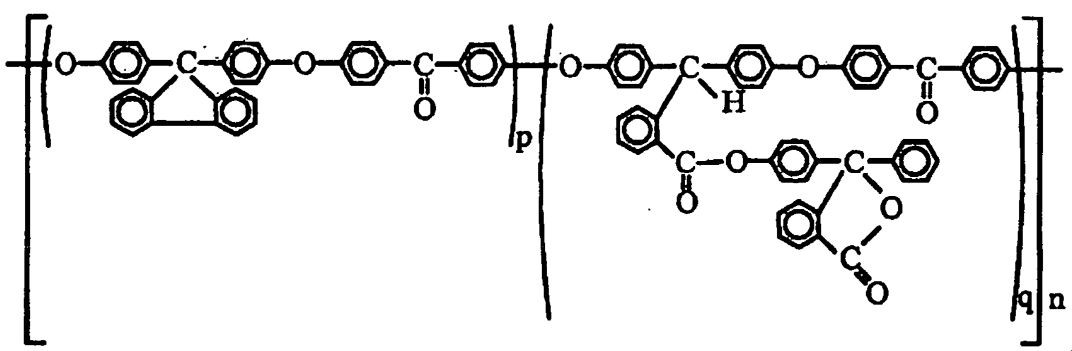

where p/q is from 0.5/0.5 to 0.9/0.1.

**53.** The electroactive polymer according to Claim 50, ***characterized* in** the following structure:

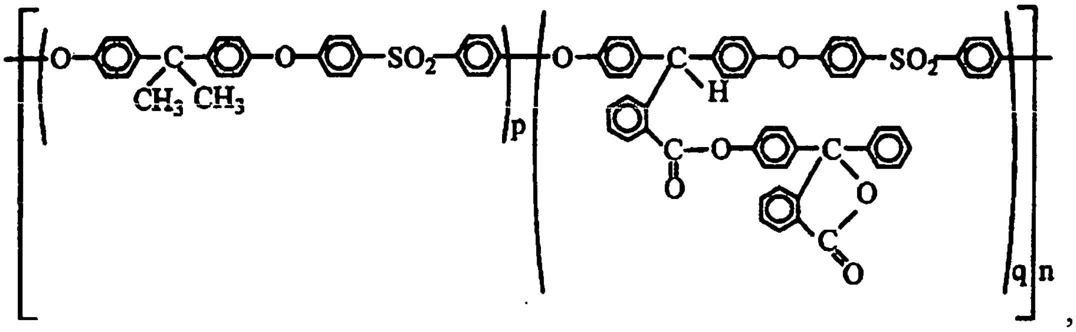

where p/q is from 0.5/0.5 to 0.9/0.1.

**54.** The electroactive polymer according to Claim 1, ***characterized* in that** the electroactive polymer comprises, as the molecular electroactive fragment of the main polymer chain, a fragment of 2,5-dibenzoyl terephthallic acid in both normal and cyclic isomeric forms.

**55.** The electroactive polymer according to Claim 54, ***characterized* in that** the electroactive polymer comprises elements of polynucleic aromatic hydrocarbons as the intermediate elements of the main polymer chain.

**56.** The electroactive polymer according to Claim 50, ***characterized* in** the following structure:

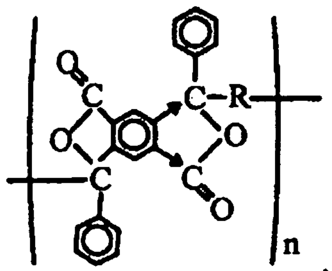

where R is, e.g., diphenyl, terphenyl, fluorene, anthracene, benzopyrene, pyrene, carbazole, dibenzofuran, dibenzothiophene.

**57.** The electroactive polymer according to Claim 54, ***characterized* in that** the electroactive polymer comprises elements of aromatic polyethers as the intermediate elements of the main polymer chain.

**58.** The electroactive polymer according to Claim 57, ***characterized* in** the following structure being **characterized by** a normal isomer form of ether:

the normal isomer form of ether is:

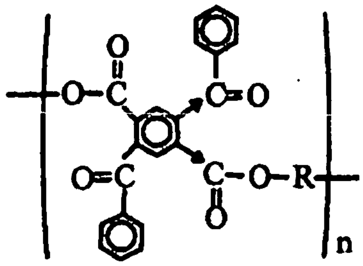,

where R =

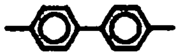, 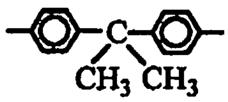, 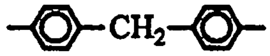, 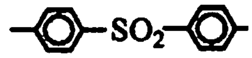

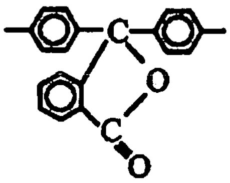, 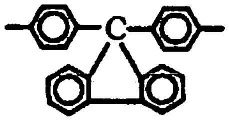

**59.** The electroactive polymer according to Claim 57, ***characterized*** **in** the following structure being **characterized by** a cyclic isomer form of ether:

the cyclic isomer form of ether is:

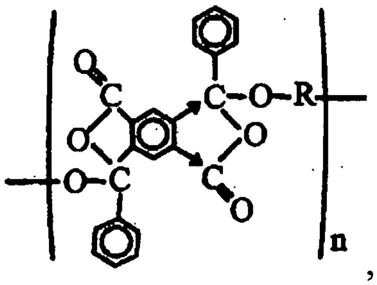,

where R =

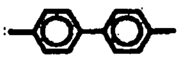, 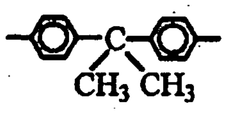, 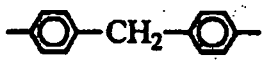, 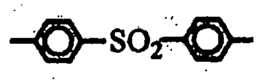

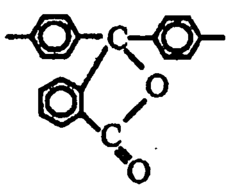, 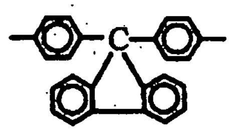

**60.** The electroactive polymer according to Claim 57, ***characterized*** **in** the following structure being **characterized by**

an isomer form of ether:

the cyclic isomer form of ether, psuedo-ether:

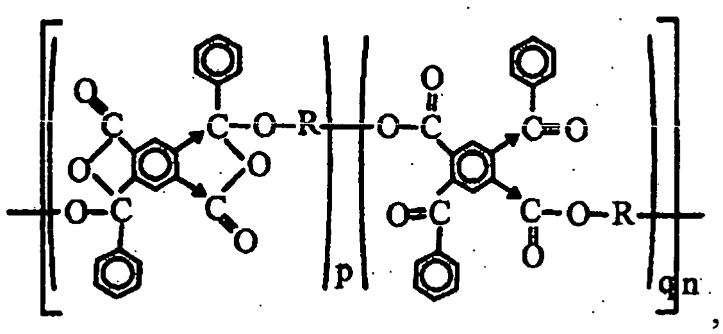

where p/q is from 0.5/0.5 to 0.95/0.05.

**61.** The electroactive polymer according to Claim 1, ***characterized* in that** the electroactive polymer comprises, as the molecular electroactive fragment being in side branches of the main polymer chain, a fragment of o-benzoylbenzoic acid or ether thereof in both normal and cyclic isomeric forms.

**62.** The electroactive polymer according to Claim 61, ***characterized* in that** the electroactive polymer comprises elements of aromatic polymers as the intermediate elements of the main polymer chain.

**63.** The electroactive polymer according to Claim 62, ***characterized* in** the following structure:

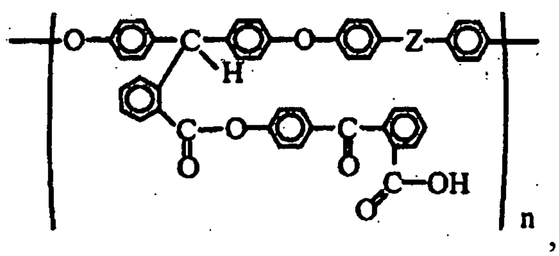

where Z = CO, $SO_2$.

**64.** The electroactive polymer according to Claim 62, ***characterized* in** the following structure:

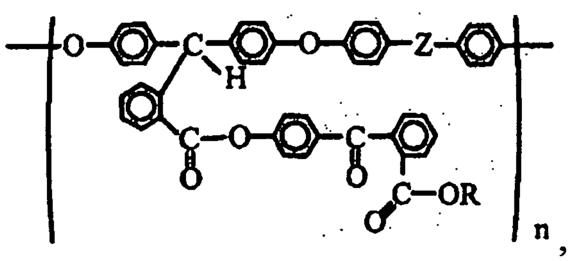

where Z = CO, $SO_2$; R = alkyl.

**65.** The electroactive polymer according to Claim 62, ***characterized* in** the following structure:

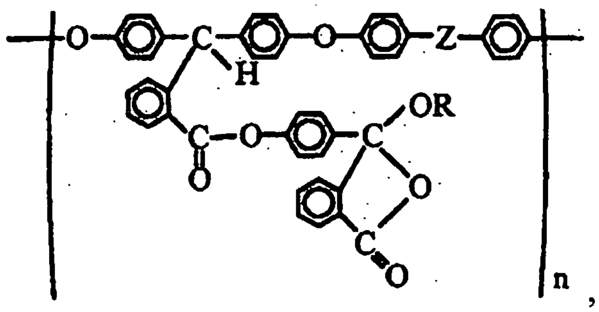

where Z = CO, $SO_2$; R = alkyl.

**66.** The electroactive polymer according to Claim 61, ***characterized* in that** the content of the electroactive fragments in the main polymer chain is controlled by copolymer composition and, thereby, by length of intermediate elements of the polymer chain coupling the electroactive fragments each other, which intermediate elements disposed in the side branches.

**67.** The electroactive polymer according to Claim 66, ***characterized* in that** the electroactive polymer comprises elements of aromatic copolymers as the intermediate elements of the main polymer chain.

**68.** The electroactive polymer according to Claim 67, ***characterized* in** the following structure:

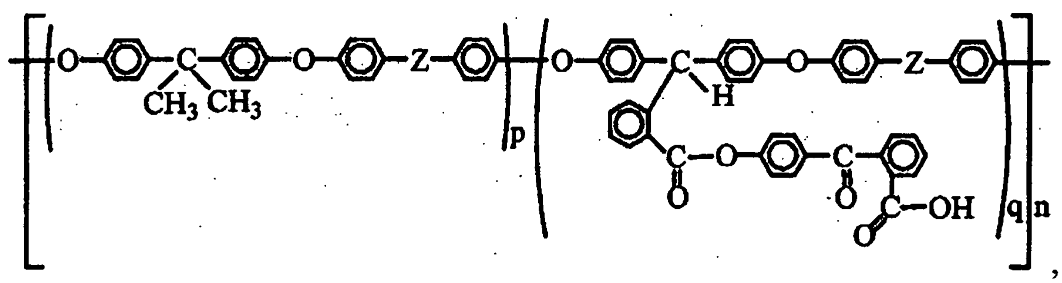

where Z = CO, $SO_2$; p/q is from 0.5/0.5 to 0.9/0.1.

**69.** The electroactive polymer according to Claim 67, ***characterized* in** the following structure:

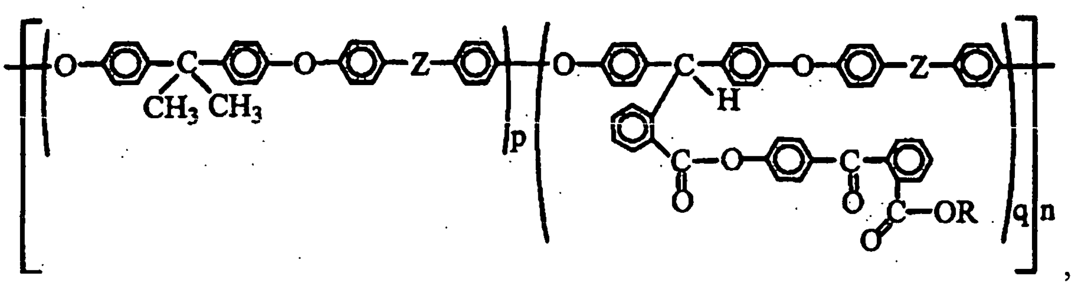

where Z = CO, $SO_2$; p/q is from 0.5/0.5 to 0.9/0.1; R = alkyl.

**70.** The electroactive polymer according to Claim 67, ***characterized* in** the following structure:

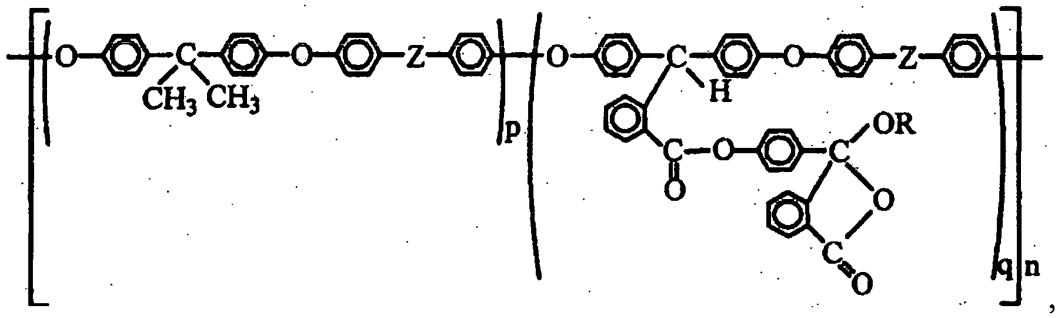

where Z = CO, $SO_2$; p/q is from 0.5/0.5 to 0.9/0.1; R = alkyl.

**71.** The electroactive polymer according to Claim 1, ***characterized*** **in that** the electroactive polymer comprises, as the molecular electroactive fragment of the main polymer chain, the sulfophthalide group.

**72.** The electroactive polymer according to Claim 71, ***characterized*** **in that** the electroactive polymer comprises elements of polynucleic aromatic hydrocarbons as the intermediate elements of the main polymer chain.

**73.** The electroactive polymer according to Claim 72, ***characterized*** **in** the following structure:

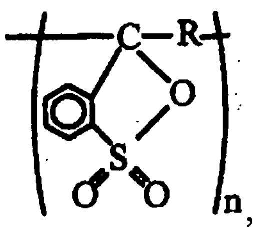

where R =

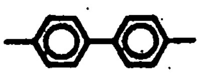

,

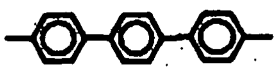

,

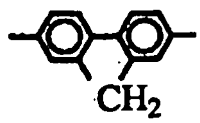

**74.** The electroactive polymer according to Claim 1, ***characterized*** **in that** the electroactive polymer comprises, as the molecular electroactive fragment of the main polymer chain, the phthalimidine group.

**75.** The electroactive polymer according to Claim 74, ***characterized*** **in that** the electroactive polymer comprises elements of polynucleic aromatic hydrocarbons as the intermediate elements of the main polymer chain.

**76.** The electroactive polymer according to Claim 75, ***characterized*** **in** the following structure:

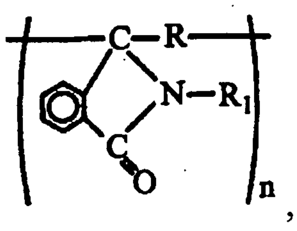

where R =

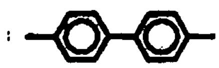, 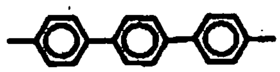

$R_1$ =

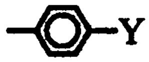

Y = H, $CH_3$, Cl,

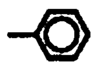

**77.** The electroactive polymer according to Claim 74, ***characterized*** **in that** the electroactive polymer comprises elements of aromatic polyesters as the intermediate elements of the main polymer chain.

**78.** The electroactive polymer according to Claim 77, ***characterized*** **in** the following structure:

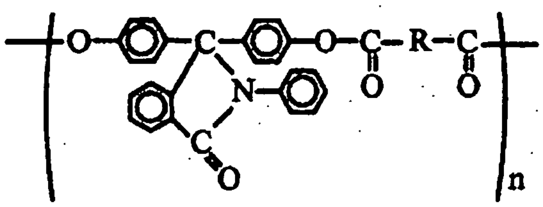,

where R =

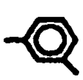, 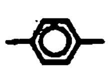, 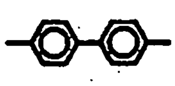, 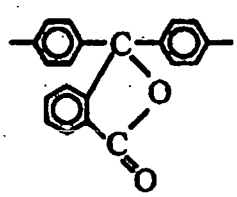, 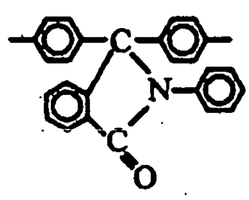

**79.** The electroactive polymer according to Claim 74, ***characterized*** **in that** the electroactive polymer comprises elements of aromatic polyethers as the intermediate elements of the main polymer chain.

**80.** The electroactive polymer according to Claim 79, ***characterized*** **in** the following structure:

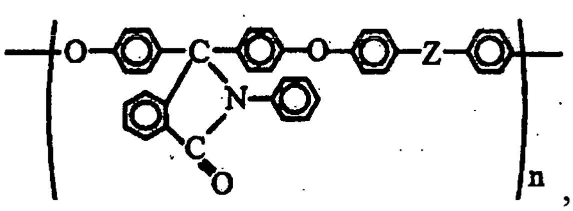,

where Z = CO, $SO_2$.

**81.** A material based on the electroactive polymers according to Claim 1, being implemented in the form of films, or fibers, or coatings, or bodies or revolution, wherein at least one of geometrical sizes defining a material form does not exceed a double depth of penetration of surface charge.

## INTERNATIONAL SEARCH REPORT

International application No.
PCT/RU 2005/000027

A. CLASSIFICATION OF SUBJECT MATTER
H01B 1/12, C08L 67/03, C08G 63/181, 63/193, 63/68

According to International Patent Classification (IPC) or to both national classification and IPC

B. FIELDS SEARCHED

Minimum documentation searched (classification system followed by classification symbols)

H01B 1/12, 1/06, C08K 5/10, C08L 67/03, C08G 63/18, 63/185, 63/193, 63/68, 63/685, 63/688, 63/66

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | SU 1734124 A1 (BASHKIRSKY GOSUDARSTVENNY UNIVERSITET IM. 40-LETIYA OKTYABRYA et al ) 15.05.1992, the claims | 1<br>2-80 |
| X<br>A | Lachinov A. N. et al. Anomalnaya elektronnaya neustoichivost polimerov pri odnoosnom davlenii. Pisma v ZHETF, 1990, volume 52, publication 2, pages 742-745 | 1, 81<br>2-80 |
| A | RU 2006078 C1 (LACHINOV A.N. et al) 15.01.1994 | 1-81 |
| A | CA 2408381 A (HARING RIMA) 01. 11. 2002 | 1-81 |
| A | SU 1807059 A1 (LENINGRADSKOE PROIZVODSTVENNOE ELEKTROMASHINOSTROITELNOE OBIEDINENIE "ELEKTROSILA" IM. S. M. KIROVA) 07.04.1993 | 1-81 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| (16. 05. 2005) | (09. 06. 2005) |
| Name and mailing address of the ISA/<br>RU<br>Facsimile No. | Authorized officer<br><br>Telephone No. |

Form PCT/ISA/210 (second sheet) (July 1992)

**INTERNATIONAL SEARCH REPORT**

International application No.
PCT/RU 2005/000027

C (Continuation). DOCUMENTS CONSIDERED TO BE RELEVANT

| Category* | Citation of document, with indication, where appropriate, of the relevant passages | Relevant to claim No. |
|---|---|---|
| A | EP 0147871 A (POLSKA AKAD NAUK CENTRUM) 10. 07. 1985 | 81 |
| A | US 2003052576 A (ADMINISTRANOR NAT AERONAUTICS) 20. 03. 2003 | 1-81 |

Form PCT/ISA/210 (continuation of second sheet) (July 1992)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SU 1734124
- RU 2006078

### Non-patent literature cited in the description


- **A. ZHEREBOV ; A. LACHINOV ; V. KORNILOV.** *Synthetic Metals,* 1997, vol. 84, 917-920
- **P. RAMART-LUCAS.** *Compt. Rend.,* 1939, vol. 208, 1312
- **FABISH T.J. ; SATSBURG H.M. ; HAIR M.L.** Charge transfer in metal/atactic polystyrene contacts. *Journal of Applied Physics,* 1976, vol. 47 (3), 930-939
- **DUKE C.B. ; FABISH T.J.** Charge-Induced Relaxation in Polymers. *Physical Review Letters.,* 1976, vol. 37 (16), 1075-10780